(19) Europäisches Patentamt / European Patent Office / Office européen des brevets

(11) **EP 4 513 996 A1**

(12) **EUROPEAN PATENT APPLICATION**
published in accordance with Art. 153(4) EPC

(43) Date of publication:
**26.02.2025 Bulletin 2025/09**

(21) Application number: **23792242.2**

(22) Date of filing: **21.04.2023**

(51) International Patent Classification (IPC):
**H04W 64/00** (2009.01)    **H04W 72/25** (2023.01)
**H04L 5/00** (2006.01)    **H04W 72/56** (2023.01)
**H04B 17/20** (2015.01)    **H04W 24/08** (2009.01)
**H04W 92/18** (2009.01)

(52) Cooperative Patent Classification (CPC):
**H04B 17/20; H04L 5/00; H04W 24/08; H04W 64/00; H04W 72/25; H04W 72/56; H04W 92/18**

(86) International application number:
**PCT/KR2023/005466**

(87) International publication number:
**WO 2023/204669 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.04.2022  US 202263333606 P**
**24.04.2022  US 202263334183 P**
**25.04.2022  US 202263334209 P**

(71) Applicant: **LG Electronics Inc.**
**Yeongdeungpo-gu**
**Seoul 07336 (KR)**

(72) Inventors:
• **KO, Woosuk**
  **Seoul 06772 (KR)**
• **SEO, Hanbyul**
  **Seoul 06772 (KR)**
• **LEE, Seungmin**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR SELECTING SL PRS TRANSMISSION RESOURCE FOR SL RTT POSITIONING**

(57)    Proposed is an operation method of a first device (100) in a wireless communication system. The method may comprise the steps of: receiving a first sidelink (SL) positioning reference signal (PRS) from a second device (200) on the basis of a first resource; receiving information about at least one resource from the second device (200); and transmitting a second SL PRS to the second device (200) on the basis of the at least one resource.

## FIG. 17

```
receiving, from a second device,
a first SL PRS, based on a first resource          S1710

receiving, from a second device,
information for at least one resource              S1720

transmitting, to a second device,
a second SL PRS, based on at least one resource    S1730
```

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for performing, by a first device, wireless communication may be proposed. For example, the method may comprise: receiving, from a second device, a first sidelink, SL, positioning reference signal, PRS, based on a first resource; receiving, from the second device, information for at least one resource; and transmitting, to the second device, a second SL PRS, based on the at least one resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a first sidelink, SL, positioning reference signal, PRS, based on a first resource; receiving, from the second device, information for at least one resource; and transmitting, to the second device, a second SL PRS, based on the at least one resource.

According to an embodiment of the present disclosure, a device adapted to control a first user equipment, UE, may be proposed. For example, the device may comprise: at least one processor; and at least one memory operably connected to the at least one processor and storing instructions. For example, the instructions, based on being executed by the at least one processor, may cause the first UE to: receive, from a second UE, a first sidelink, SL, positioning reference signal, PRS, based on a first resource; receive, from the second UE, information for at least one resource; and transmit, to the second UE, a second SL PRS, based on the at least one resource.

According to an embodiment of the present disclosure, a non-transitory computer-readable storage medium storing instructions may be proposed. For example, the instructions, based on being executed, may cause a first device to: receive, from a second device, a first sidelink, SL, positioning reference signal, PRS, based on a first resource; receive, from the second device, information for at least one resource; and transmit, to the second device, a second SL PRS, based on the at least one resource.

According to an embodiment of the present disclosure, a method for performing, by a second device, wireless communication may be proposed. For example, the method may comprise: performing sensing; performing a resource reservation for a first resource and at least one resource, based on a result of the sensing; transmitting, to a first device, a first sidelink, SL, positioning reference signal, PRS, based on the first resource; transmitting, to the first device, information for the at least one resource; receiving, from the first device, a second SL PRS, based on the at least one resource; and performing positioning for the second device based on the first SL PRS and the second SL PRS.

According to an embodiment of the present disclosure, a second device for performing wireless communication may be proposed. For example, the first device may comprise: at least one transceiver; at least one processor; and at least one memory operably connected to the at least one processor and storing instructions that, based on being executed by the at least one processor, cause the second device to perform operations. For example, the operations may comprise:

performing sensing; performing a resource reservation for a first resource and at least one resource, based on a result of the sensing; transmitting, to a first device, a first sidelink, SL, positioning reference signal, PRS, based on the first resource; transmitting, to the first device, information for the at least one resource; receiving, from the first device, a second SL PRS, based on the at least one resource; and performing positioning for the second device based on the first SL PRS and the second SL PRS.

**BRIEF DESCRIPTION OF THE DRAWINGS**

FIG. 1 shows a communication structure that can be provided in a 6G system, according to one embodiment of the present disclosure.

FIG. 2 shows an electromagnetic spectrum, according to one embodiment of the present disclosure.

FIG. 3 shows a structure of an NR system, based on an embodiment of the present disclosure.

FIG. 4 shows a radio protocol architecture, based on an embodiment of the present disclosure.

FIG. 5 shows a structure of a radio frame of an NR, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIG. 8 shows a procedure of performing V2X or SL communication by a UE based on a transmission mode, based on an embodiment of the present disclosure.

FIG. 9 shows three cast types, based on an embodiment of the present disclosure.

FIG. 10 shows an example of an architecture in a 5G system in which positioning for a UE connected to a Next Generation-Radio Access Network (NG-RAN) or E-UTRAN is possible, according to an embodiment of the present disclosure.

FIG. 11 shows an implementation example of a network for measuring a position of a UE, according to an embodiment of the present disclosure.

FIG. 12 shows an example of a protocol layer used to support LTE Positioning Protocol (LPP) message transmission between an LMF and a UE, according to an embodiment of the present disclosure.

FIG. 13 shows an example of a protocol layer used to support NR Positioning Protocol A (NRPPa) PDU transmission between an LMF and an NG-RAN node, according to an embodiment of the present disclosure.

FIG. 14 shows an Observed Time Difference Of Arrival (OTDOA) positioning method according to an embodiment of the present disclosure.

FIG. 15 shows a procedure for a first device to share a resource for receiving a second SL PRS, according to one embodiment of the present disclosure.

FIG. 16 shows a procedure for a second device to transmit a second SL PRS, according to one embodiment of the present disclosure.

FIG. 17 shows a procedure for a first device to perform wireless communication, according to one embodiment of the present disclosure.

FIG. 18 shows a procedure for a second device to perform wireless communication, according to one embodiment of the present disclosure.

FIG. 19 shows a communication system 1, based on an embodiment of the present disclosure.

FIG. 20 shows wireless devices, based on an embodiment of the present disclosure.

FIG. 21 shows a signal process circuit for a transmission signal, based on an embodiment of the present disclosure.

FIG. 22 shows another example of a wireless device, based on an embodiment of the present disclosure.

FIG. 23 shows a hand-held device, based on an embodiment of the present disclosure.

FIG. 24 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B" . For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

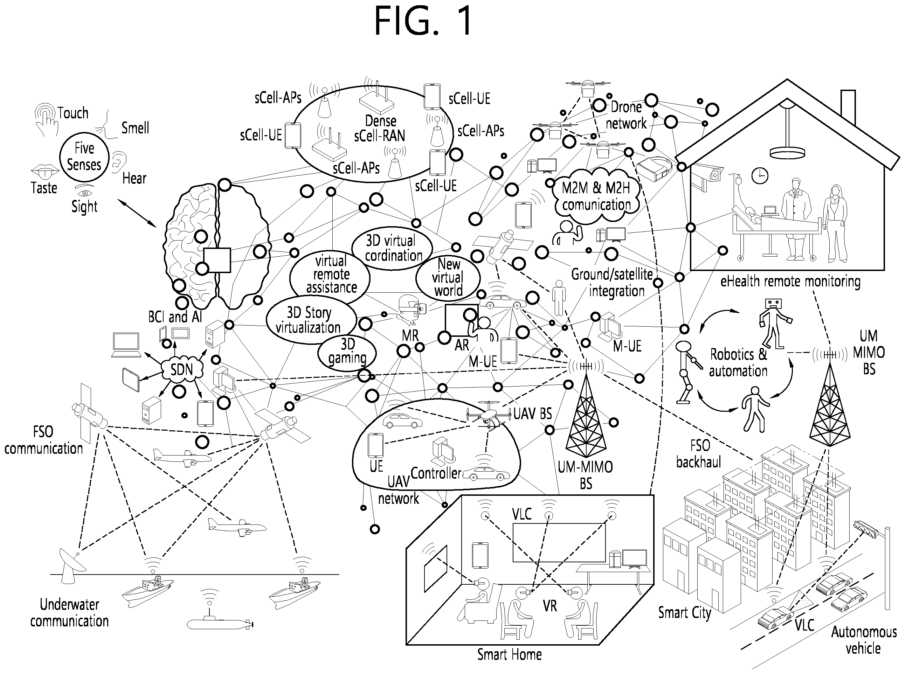

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.

- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

The following describes the core implementation technologies for 6G systems.

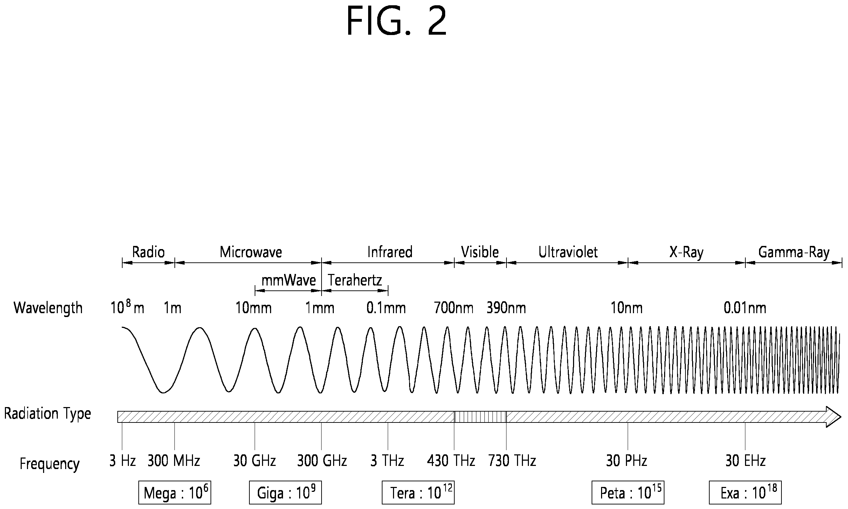

- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

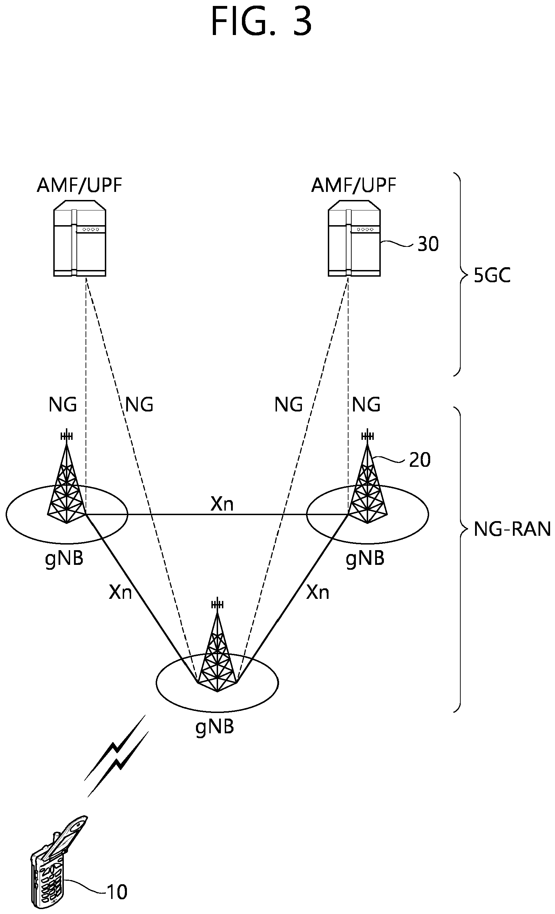

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

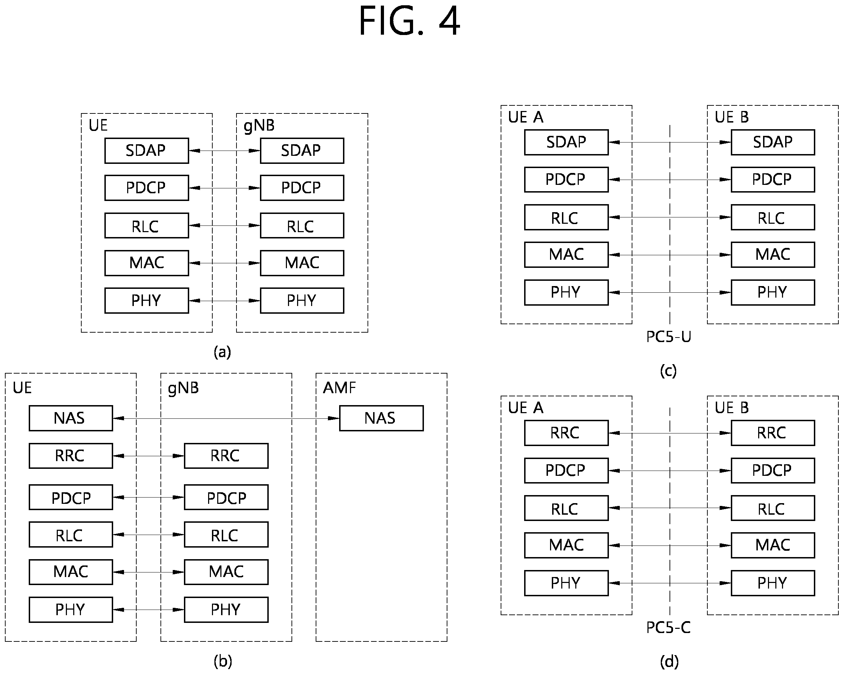

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC-IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

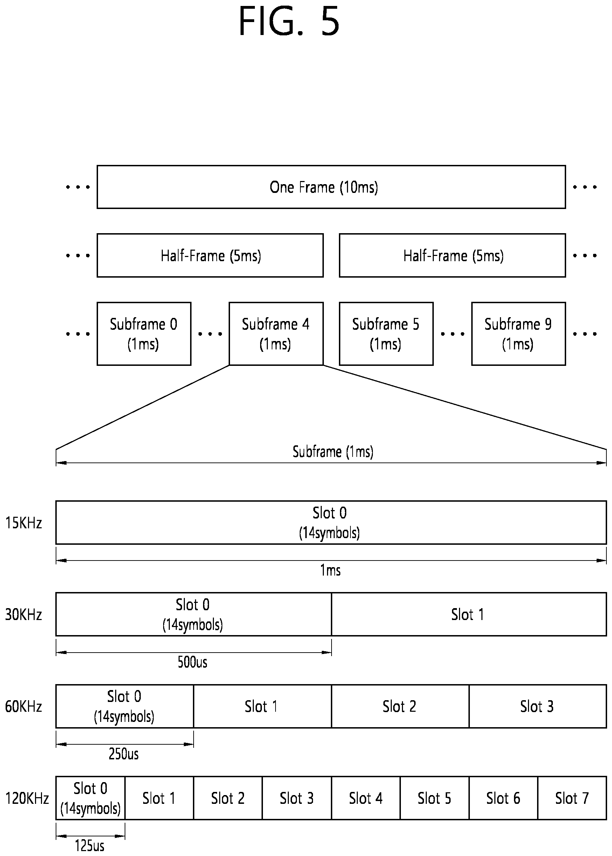

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), number of slots per frame ($N^{frame,u}_{slot}$), and number of slots per subframe ($N^{subframe,u}_{slot}$), depending on the SCS configuration (u), when Normal CP or Extended CP is used.

[Table 2]

| CP type | SCS ($15*2^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

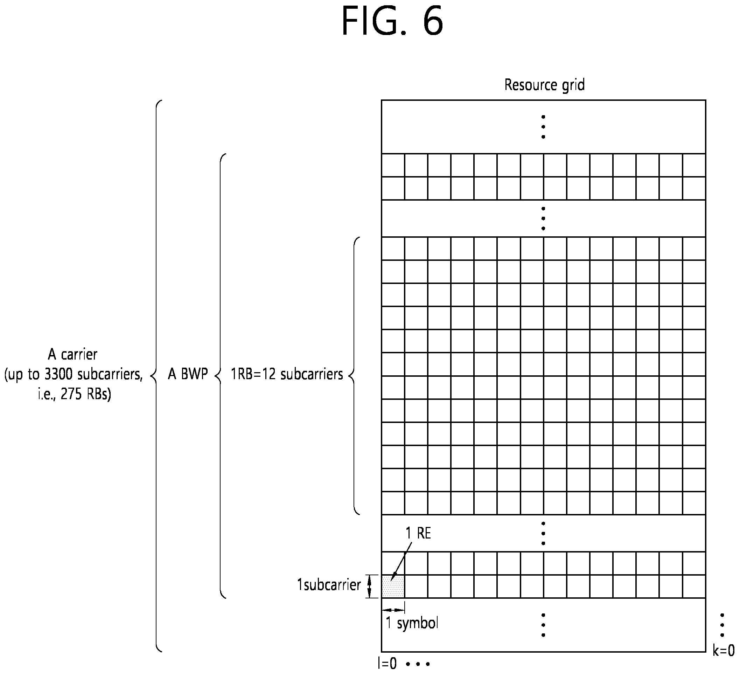

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

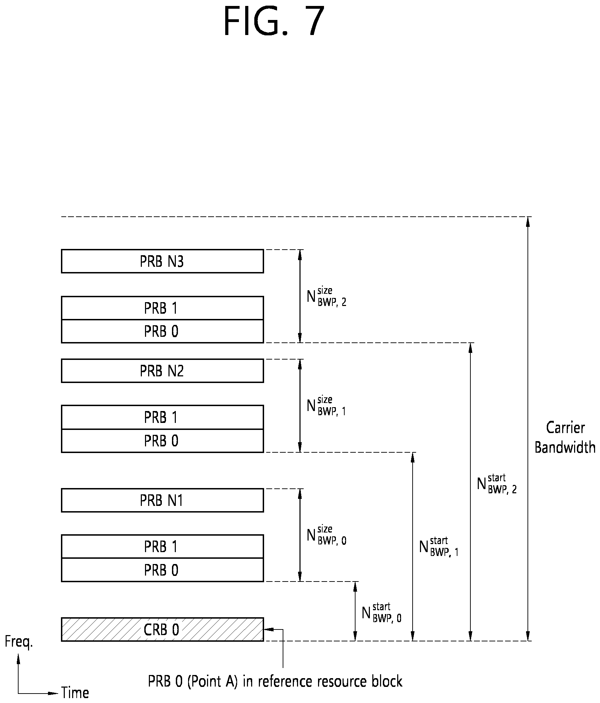

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

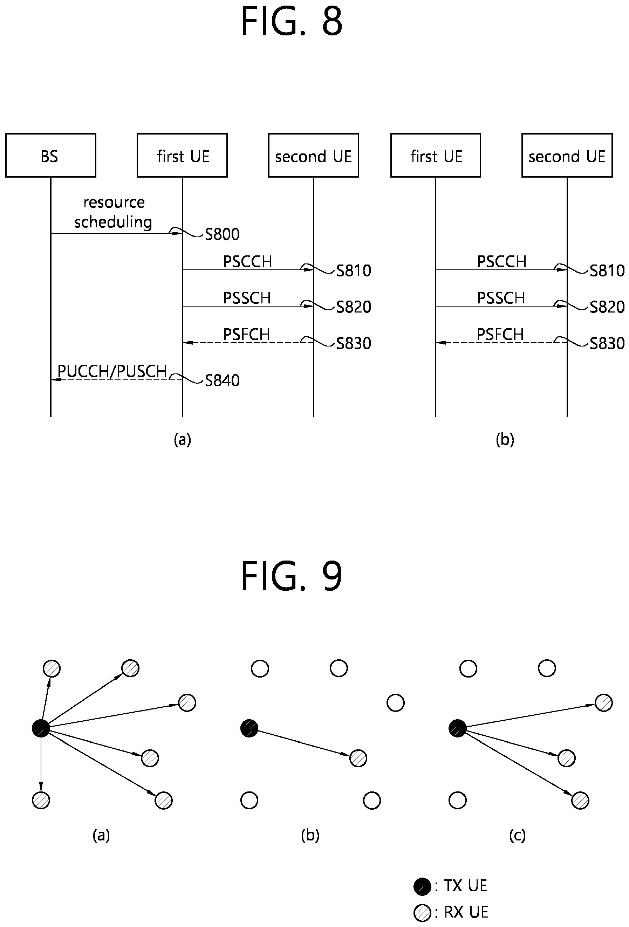

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1 st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources ($r_0', r_1', r_2', ...$) which may be subject to pre-emption.

- it is up to UE implementation to determine the subset of resources as requested by higher layers before or after the slot $r_i''$ - $T_3$, where $r_i''$ is the slot with the smallest slot index among $(r_0, r_1, r_2,...)$ and $(r_0', r_1', r_2', ...)$, and $T_3$ is equal to $T_{proc,1}^{SL}$, where $T_{proc,1}^{SL}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j$ = $prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P_{rsvp\_TX}'$.

Notation:

( $t_0'^{SL}, t_1'^{SL}, t_2'^{SL}, ...$ ) may denote the set of slots which belongs to the sidelink resource pool.
For example, a UE may select a set of candidate resources (Sa) based on Table 5. For example, when resource (re)selection is triggered, a UE may select a candidate resource set (Sa) based on Table 5. For example, when re-evaluation or pre-emption is triggered, a UE may select a candidate resource set (Sa) based on Table 5.

[Table 5]

| |
|---|
| The following steps are used:<br><br>1) A candidate single-slot resource for transmission $R_{X,y}$ is defined as a set of $L_{subCH}$ contiguous sub-channels with sub-channel x+j in slot $t_y'^{SL}$ where $j = 0,...,$ $L_{subCH}$ - 1. The UE shall assume that any set of $L_{subCH}$ contiguous sub-channels included in the corresponding resource pool within the time interval [$n$ + $T_1$, n + $T_2$] correspond to one candidate single-slot resource, where<br><br>- selection of $T_1$ is up to UE implementation under $0 \leq T_1 \leq T_{proc,1}^{SL}$, where $T_{proc,1}^{SL}$ is defined in slots in Table 8.1.4-2 where $\mu_{SL}$ is the SCS configuration of the SL BWP;<br>- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br>The total number of candidate single-slot resources is denoted by $M_{total}$.<br><br>2) The sensing window is defined by the range of slots $n$ - $T_0$, $n - T_{proc,0}^{SL}$ ) where $T_0$ is defined above and is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.<br><br>3) The internal parameter $Th(p_i, p_j)$ is set to the corresponding value of RSRP threshold indicated by the i-th field in *sl-Thres-RSRP-List,* where $i = p_i + (p_j - 1) * 8$.<br>4) The set $S_A$ is initialized to the set of all the candidate single-slot resources. |

(continued)

5) The UE shall exclude any candidate single-slot resource $R_{x,y}$ from the set $S_A$ if it meets all the following conditions:

- the UE has not monitored slot $t'^{SL}_m$ in Step 2.
- for any periodicity value allowed by the higher layer parameter *sl-ResourceReservePeriodList* and a hypothetical SCI format 1-A received in slot $t'^{SL}_m$ with *'Resource reservation period* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *resource reservation period'* field, if present, and *'Priority'* field in the received SCI format 1-A indicate the values $P_{rsvp\_Rx}$ and *prio$_{RX}$*, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \le P'_{rsvp\_RX}$, where $t'^{SL}_{n'} = n$ if slot $n$ belongs to the set ( $t'^{SL}_0, t'^{SL}_1, \dots, t'^{SL}_{T'_{max}-1}$ ), otherwise slot $t'^{SL}_{n'}$ is the first slot after slot $n$ belonging to the set ( $t'^{SL}_0, t'^{SL}_1, \dots, t'^{SL}_{T'_{max}-1}$ ); otherwise $Q = 1$. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0, r_1, r_2, ...$) is not a member of $S_A$, then the UE shall report re-evaluation of the resource $r_i$ to higher layers.

If a resource $r'_i$ from the set ( $r'_0, r'_1, r'_2, \dots$ ) meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and
- the associated priority *prio$_{RX}$*, satisfies one of the following conditions:
- *sl-PreemptionEnable* is provided and is equal to 'enabled' and $prio_{TX} > prio_{RX}$
- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 6 and 7.

[Table 6]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}$=10*SL_RESOURCE_RESELECTION_COUNTER, where SL_RESOURCE_RESELECTION_COUNTER is provided by higher layers.

If partial sensing is configured by higher layers then the following steps are used:

1) A candidate single-subframe resource for PSSCH transmission $R_{X,y}$ is defined as a set of $L_{subCH}$ contiguous sub-channels with sub-channel x+j in subframe $t_y^{SL}$ where $j = 0, ... , L_{subCH}$ - 1. The UE shall determine by its implementation a set of subframes which consists of at least Y subframes within the time interval [$n + T_1$, n + $T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = (a - 1) * 8 + b.

4) The set $S_A$ is initialized to the union of all the candidate single-subframe resources. The set $S_B$ is initialized to an empty set.

5) The UE shall exclude any candidate single-subframe resource $R_{X,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.
- PSSCH-RSRP measurement according to the received SCI format 1 is higher than $Th_{prio_{TX}, prio_{RX}}$.

- the SCI format received in subframe $t_m^{SL}$ or the same SCI format 1 which is assumed to be received in subframe(s) $t_{m+q \times P_{step} \times P_{rsvp_{RX}}}^{SL}$ determines according to 14.1.1.4C the set of resource blocks and subframes which overlaps with $R_{x,y+j \times P'rsvp\_Tx}$ for q=1, 2, ..., Q and $j$=0, 1, ..., $C_{resel}$ - 1. Here, $Q = \frac{1}{P_{rsvp\_RX}}$ if $P_{rsvp\_RX}$ and y' - m $\leq$ $P_{step} \times P_{rsvp\_RX} + P_{step}$, where $t_{y'}^{SL}$ is the last subframe of the Y subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 7]

7) For a candidate single-subframe resource $R_{x,y}$ remaining in the set $S_A$, the metric $E_{X,y}$ is defined as the linear average of S-RSSI measured in sub-channels x+k for k = 0,..., $L_{subCH}$ - 1 in the monitored subframes in Step 2 that can be expressed by $t_{y-P_{step}*j}^{SL}$ for a non-negative integer $j$.

(continued)

8) The UE moves the candidate single-subframe resource $R_{X,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{X,y}$ is defined as a set of $L_{subCH}$ contiguous sub-channels with sub-channel x+j in subframe $t_y^{SL}$ where $j = 0, ..., L_{subCH}$ - 1. The UE shall assume that any set of $L_{subCH}$ contiguous sub-channels included in the corresponding PSSCH resource pool within the time interval [$n + T_1$, $n + T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{X,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

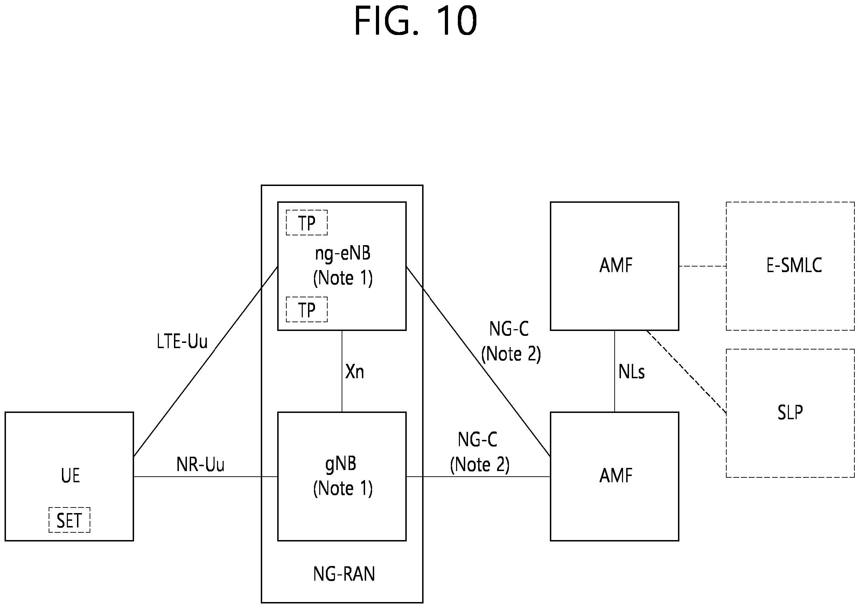

FIG. 10 shows an example of an architecture in a 5G system in which positioning for a UE connected to a Next Generation-Radio Access Network (NG-RAN) or E-UTRAN is possible, according to an embodiment of the present disclosure. The embodiment of FIG. 10 may be combined with various embodiments of the present disclosure.

Referring to FIG. 10, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated position or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for position estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centrer (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a position estimation value for the target UE and accuracy of position estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a position of the UE. For example, the UE may include an independent positioning function such as a global positioning system (GPS), and may report the position of the UE independent of NG-RAN transmission. Positioning information obtained independently as such may be utilized as assistance information of the positioning information obtained from the network.

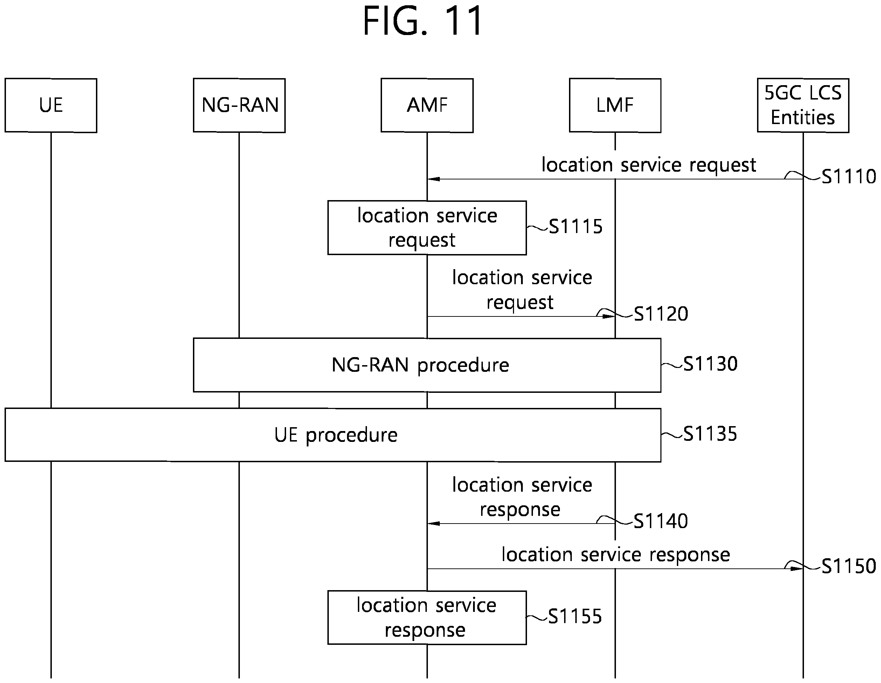

FIG. 11 shows an implementation example of a network for measuring a position of a UE, according to an embodiment of the present disclosure. The embodiment of FIG. 11 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 11. That is, it may be assumed in FIG. 11 that the UE is in a connected mode. However, due to signaling and data inactivation or the like, the signaling connection may be released by NG-RAN while a positioning process is performed.

A network operation process for measuring a position of a UE will be described in detail with reference to FIG. 11. In step S1 110, a 5GC entity such as GMLC may request a serving AMF to provide a location service for measuring a position of a target UE. However, even if the GMLC does not request for the location service, based on step S1115, the serving AMF may determine that the location service for measuring the position of the target UE is required. For example, to measure the position of the UE for an emergency call, the serving AMF may determine to directly perform the location service.

Thereafter, the AMF may transmit the location service request to an LMF based on step S1120, and the LMF may start location procedures to obtain position measurement data or position measurement assistance data together with a serving ng-eNB and a serving gNB, according to step S1130. Additionally, based on step S1135, the LMF may start location procedures for downlink positioning together with the UE. For example, the LMF may transmit assistance data defined in 3GPP TS 36.355, or may obtain a position estimation value or a position measurement value. Meanwhile, step S1135 may be performed additionally after step S1130 is performed, or may be performed instead of step S1 130.

In step S1140, the LMF may provide a location service response to the AMF. In addition, the location service response may include information on whether position estimation of the UE is successful and a position estimation value of the UE. Thereafter, if the procedure of FIG. 11 is initiated by step S1110, in step S1 150, the AMF may transfer the location service response to a 5GC entity such as GMLC, and if the procedure of FIG. 11 is initiated by step S1 115, in step S1155, the AMF may use the location service response to provide a location service related to an emergency call or the like.

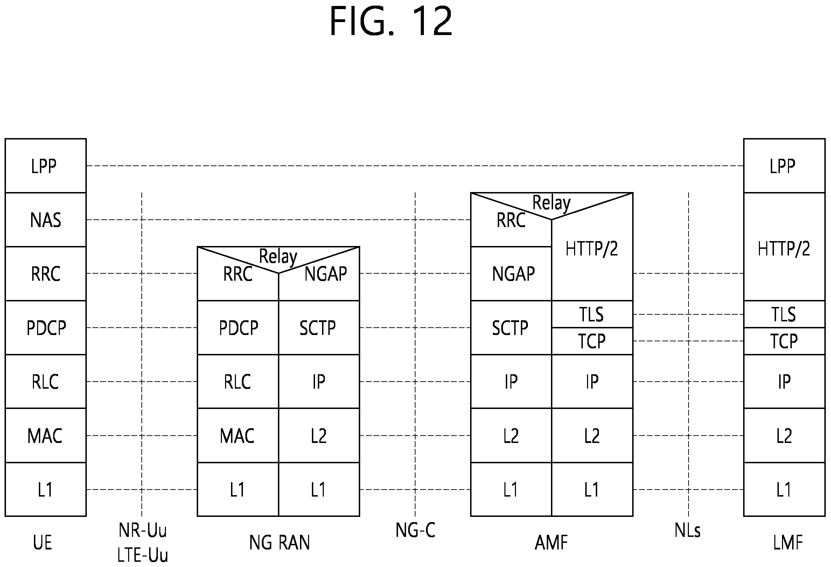

FIG. 12 shows an example of a protocol layer used to support LTE Positioning Protocol (LPP) message transmission between an LMF and a UE, according to an embodiment of the present disclosure. The embodiment of FIG. 12 may be combined with various embodiments of the present disclosure.

An LPP PDU may be transmitted through a NAS PDU between an AMF and the UE. Referring to FIG. 12, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

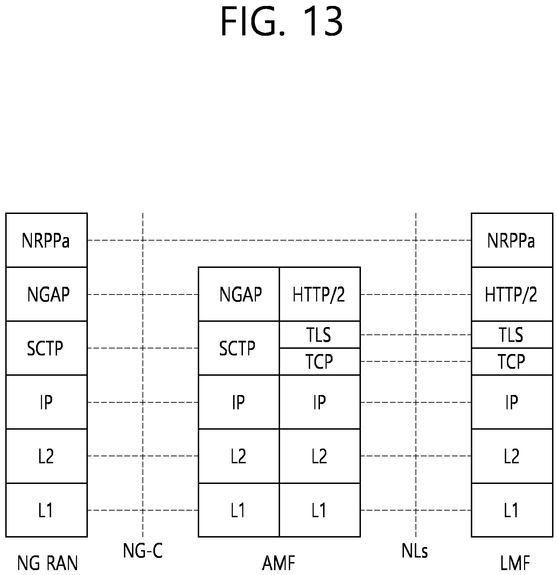

FIG. 13 shows an example of a protocol layer used to support NR Positioning Protocol A (NRPPa) PDU transmission between an LMF and an NG-RAN node, according to an embodiment of the present disclosure. The embodiment of FIG. 13 may be combined with various embodiments of the present disclosure.

Referring to FIG. 13, the NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., position measurement information or the like), and a second type is a non UE associated procedure for transferring information (e.g., , gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

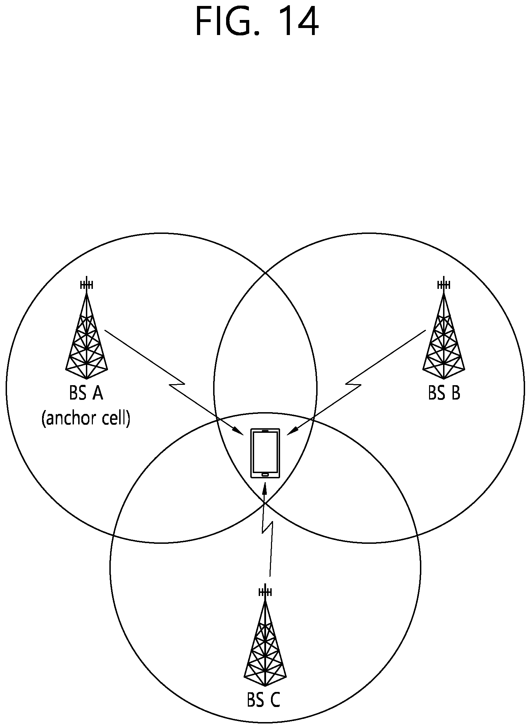

FIG. 14 shows an Observed Time Difference Of Arrival (OTDOA) positioning method according to an embodiment of the present disclosure. The embodiment of FIG. 14 may be combined with various embodiments of the present disclosure.

Referring to FIG. 14, the OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a position of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a position of a UE. In this case, since accuracy and/or uncertainty for each TOA measurement may be present, the estimated position of the UE may be known as a specific range based on measurement uncertainty.

For example, RSTD for two TPs may be calculated based on Equation 1.

[Equation 1]

$$RSTDi,1 = \frac{\sqrt{(x_t-x_i)^2+(y_t-y_i)^2}}{c} - \frac{\sqrt{(x_t-x_1)^2+(y_t-y_1)^2}}{c} + (T_i - T_1) + (n_i - n_1)$$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Heprein, (Ti-T1) may be referred to as "real time differences (RTDs)" as a transmission time offset between two TPs, and ni, n1 may represent values related to UE TOA measurement errors.

(2) E-CID (Enhanced Cell ID)

In a cell ID (CID) positioning method, a position of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE position estimation value. In the E-CID positioning method, although some of the measurement methods which are the same as those used in a measurement control system of an RRC protocol may be used, additional measurement is not performed in general only for position measurement of the UE. In other words, a measurement configuration or a measurement control message may not be provided additionally to measure the position of the UE. Also, the UE may not expect that an additional measurement operation only for position measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io

- E-UTRAN measurement: ng-eNB Rx-Tx Time difference, timing advance (TADV), angle of arrival (AoA)

Herein, the TADV may be classified into Type 1 and Type 2 as follows.

$$TADV\ Type\ 1 = (\text{ng-eNB Rx-Tx time difference}) + (\text{UE E-UTRA Rx-Tx time difference})$$

$$TADV\ Type\ 2 = \text{ng-eNB Rx-Tx time difference}$$

Meanwhile, AoA may be used to measure a direction of the UE. The AoA may be defined as an estimation angle with respect to the position of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a position of a UE by estimating an arrival time of SRS. When calculating an estimated SRS arrival time, the position of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

Referring to the standard document, some procedures and technical specifications relevant to this disclosure are as follows.

[Table 8]

| Reference signal time difference (RSTD) for E-UTRA | |
|---|---|
| **Definition** | The relative timing difference between the E-UTRA neighbour cell j and the E-UTRA reference cell i, defined as $T_{SubframeRxj} - T_{SubframeRxi}$, where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
| **Applicable for** | RRC_CONNECTED inter-RAT |

[Table 9]

| **Definition** | DL PRS reference signal received power (DL PRS-RSRP), is defined as the linear average over the power contributions (in [W]) of the resource elements that carry DL PRS reference signals configured for RSRP measurements within the considered measurement frequency bandwidth. For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
|---|---|
| **Applicable for** | RRC_CONNECTED intra-frequency, RRC_CONNECTED inter-frequency |

[Table 10]

| Definition | DL relative timing difference (DL RSTD) between the positioning node j and the reference positioning node $i$, is defined as $T_{SubframeRxj}$ - $T_{SubframeRxi}$, Where: $T_{SubframeRxj}$ is the time when the UE receives the start of one subframe from positioning node $j$. $T_{SubframeRxi}$ is the time when the UE receives the corresponding start of one subframe from positioning node $i$ that is closest in time to the subframe received from positioning node $j$. Multiple DL PRS resources can be used to determine the start of one subframe from a positioning node. For frequency range 1, the reference point for the DL RSTD shall be the antenna connector of the UE. For frequency range 2, the reference point for the DL RSTD shall be the antenna of the UE. |
|---|---|
| Applicable for | RRC_CONNECTED intra-frequency |
| | RRC_CONNECTED inter-frequency |

[Table 11]

| Definition | The UE Rx - Tx time difference is defined as $T_{UE-RX}$ - $T_{UE-TX}$ Where: $T_{UE-RX}$ is the UE received timing of downlink subframe #$i$ from a positioning node, defined by the first detected path in time. $T_{UE-TX}$ is the UE transmit timing of uplink subframe #$j$ that is closest in time to the subframe #$i$ received from the positioning node. Multiple DL PRS resources can be used to determine the start of one subframe of the first arrival path of the positioning node. For frequency range 1, the reference point for $T_{UE-RX}$ measurement shall be the Rx antenna connector of the UE and the reference point for $T_{UE-TX}$ measurement shall be the Tx antenna connector of the UE. For frequency range 2, the reference point for $T_{UE-RX}$ measurement shall be the Rx antenna of the UE and the reference point for $T_{UE-TX}$ measurement shall be the Tx antenna of the UE. |
|---|---|
| Applicable for | RRC_CONNECTED intra-frequency |
| | RRC_CONNECTED inter-frequency |

[Table 12]

| Definition | [The UL Relative Time of Arrival ($T_{UL-RTOA}$) is the beginning of subframe $i$ containing SRS received in positioning node $j$, relative to the configurable reference time.] Multiple SRS resources for positioning can be used to determine the beginning of one subframe containing SRS received at a positioning node. The reference point for $T_{UL-RTOA}$ shall be:     - for type 1-C base station TS 38.104 [9]: the Rx antenna connector,     - for type 1-O or 2-O base station TS 38.104 [9]: the Rx antenna,     - for type 1-H base station TS 38.104 [9]: the Rx Transceiver Array Boundary connector. |
|---|---|

[Table 13]

| Definition | The gNB Rx - Tx time difference is defined as $T_{gNB-RX}$ - $T_{gNB-TX}$ Where: $T_{gNB-RX}$ is the positioning node received timing of uplink subframe #$i$ containing SRS associated with UE, defined by the first detected path in time. $T_{gNB-TX}$ is the positioning node transmit timing of downlink subframe #$j$ that is closest in time to the subframe #$i$ received from the UE. Multiple SRS resources for positioning can be used to determine the start of one subframe containing SRS. |
|---|---|

(continued)

| | |
|---|---|
| | The reference point for $T_{gNB\text{-}RX}$ shall be:<br> - for type 1-C base station TS 38.104 [9]: the Rx antenna connector,<br> - for type 1-O or 2-O base station TS 38.104 [9]: the Rx antenna,<br> - for type 1-H base station TS 38.104 [9]: the Rx Transceiver Array Boundary connector.<br>The reference point for $T_{gNB\text{-}TX}$ shall be:<br> - for type 1-C base station TS 38.104 [9]: the Tx antenna connector,<br> - for type 1-O or 2-O base station TS 38.104 [9]: the Tx antenna,<br> - for type 1-H base station TS 38.104 [9]: the Tx Transceiver Array Boundary connector. |

[Table 14]

| | |
|---|---|
| Definition | UL Angle of Arrival (UL AoA) is defined as the estimated azimuth angle and vertical angle of a UE with respect to a reference direction, wherein the reference direction is defined:<br> - In the global coordinate system (GCS), wherein estimated azimuth angle is measured relative to geographical North and is positive in a counter-clockwise direction and estimated vertical angle is measured relative to zenith and positive to horizontal direction<br> - In the local coordinate system (LCS), wherein estimated azimuth angle is measured relative to x-axis of LCS and positive in a counter-clockwise direction and estimated vertical angle is measured relatize to z-axis of LCS and positive to x-y plane direction. The bearing, downtilt and slant angles of LCS are defined according to TS 38.901 [14].<br>The UL AoA is determined at the gNB antenna for an UL channel corresponding to this UE. |

[Table 15]

| | |
|---|---|
| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions.<br>For frequency range 1, the reference point for the UL SRS-RSRP shall be the antenna connector of the gNB. For frequency range 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |

[Table 16]

| |
|---|
| 14.1.1.6 UE procedure for determining the subset of resources to be reported to higher layers in PSSCH resource selection in sidelink transmission mode 4 and in sensing measurement in sidelink transmission mode 3<br>In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers (described in [8]). $C_{resel}$ is determined according to Subclause 14.1.1.4B.<br>In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers (described in [11]). $C_{resel}$ is determined by $C_{resel}=10*$SL_RESOURCE_RESELECTION_COUNTER, where SL_RESOURCE_RESELECTION_COUNTER is provided by higher layers [11]. |

[Table 17]

| |
|---|
| If partial sensing is configured by higher layers then the following steps are used: |

1) A candidate single-subframe resource for PSSCH transmission $R_{x,y}$ is defined as a set of $L_{subCH}$ contiguous sub-channels with sub-channel $x+j$ in subframe $t_y^{SL}$ where $j=0,...,L_{subCH}-1$. The UE shall determine by its implementation a set of subframes which consists of at least Y subframes within the time interval $[n + T_1, n + T_2]$ where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool (described in 14.1.5) within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = *(a - 1) * 8 + b*.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively according to Subclause 14.2.1.
- PSSCH-RSRP measurement according to the received SCI format 1 is higher than $Th_{prio_{TX},prio_{RX}}$.

- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rsvp\_TX}}$ for q=1, 2, ..., Q and j=0, 1, ..., $C_{resel}$-1. Here, $Q = \dfrac{1}{P_{rsvp\_RX}}$ if $P_{rsvp\_Rx} < 1$ and y' - m $\leq P_{step} \times P_{rsvp\_RX} + P_{step}$, where $t_{y'}^{SL}$ is the last subframe of the Y subframes , and Q = 1 otherwise.

[Table 18]

6) If the number of candidate single-subframe resources remaining in the set $S_A$ is smaller than $0.2 \cdot M_{total}$, then Step 4 is repeated with $Th_{a,b}$ increased by 3 dB.

7) For a candidate single-subframe resource $R_{x,y}$ remaining in the set $S_A$, the metric $E_{X,y}$ is defined as the linear average of S-RSSI measured in sub-channels x+k for k=0,...,$L_{subCH}$-1 in the monitored subframes in Step 2 that can be expressed by $t_{y-P_{step}*j}^{SL}$ for a non-negative integer j.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to 0.2·Molal.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10].

[Table 19]

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j=0,...,L_{subCH}-1$. The UE shall assume that any set of $L_{subCH}$ contiguous sub-channels included in the corresponding PSSCH resource pool (described in 14.1.5) within the time interval $[n+T_1,n+T_2]$ corresponds to one candidate single-subframe resource, where selections of $T_1$ and $T_2$ are up to UE implementations under $T_1{\leq}4$ and $T_{2min}(prio_{TX}){\leq}T_2{\leq}100$, if $T_{2min}(prio_{TX})$ is provided by higher layers for $prio_{TX}$, otherwise $20{\leq}T_2{\leq}100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10].

The UE shall report set $S_B$ to higher layers.

[Table 20]

UE procedure for determining the subset of resources to be reported to higher layers in PSSCH resource selection in sidelink resource allocation mode 2

In resource allocation mode 2, the higher layer can request the UE to determine a subset of resources from which the higher layer will select resources for PSSCH/PSCCH transmission. To trigger this procedure, in slot $n$, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0,r_1,r_2,...)$ which may be subject to re-evaluation and a set of resources $(r_0',r_1',r_2',...)$ which may be subject to pre-emption.
    - it is up to UE implementation to determine the subset of resources as requested by higher layers before or after the slot $r_i'' - T_3$, where $r_i''$ is the slot with the smallest slot index among $(r_0,r_1,r_2,...)$ and $(r_0',r_1',r_2',...)$, and $T_3$ is equal to $T_{proc,1}^{SL}$, where $T_{proc,1}^{SL}$ is defined in slots in Table 8.1.4-2 where $\mu_{SL}$ is the SCS configuration of the SL BWP.

The following higher layer parameters affect this procedure:

- *sl-SelectionWindowList*: internal parameter $T_{2min}$ is set to the corresponding value from higher layer parameter *sl-SelectionWindowList* for the given value of $prio_{TX}$.

(continued)

| |
|---|
| *- sl-Thres-RSRP-List:* this higher layer parameter provides an RSRP threshold for each combination ($p_i$, $p_j$), where $p_i$ is the value of the priority field in a received SCI format 1-A and $p_j$ is the priority of the transmission of the UE selecting resources; for a given invocation of this procedure, $p_j$ = $prio_{TX}$. <br>    *- sl-RS-ForSensing* selects if the UE uses the PSSCH-RSRP or PSCCH-RSRP measurement, as defined in clause 8.4.2.1. <br>    *- sl-ResourceReservePeriodList* <br>    *- sl-SensingWindow:* internal parameter $T_0$ is defined as the number of slots corresponding to *sl-Sensing-Window* msec <br>    *- sl-TxPercentageList:* internal parameter $X$ for a given $prio_{TX}$ is defined as *sl-TxPercentageList* ($prio_{TX}$) converted from percentage to ratio <br>    *- sl-PreemptionEnable*: if *sl-PreemptionEnable* is provided, and if it is not equal to 'enabled', internal parameter $prio_{pre}$ is set to the higher layer provided parameter *sl-PreemptionEnable* |

[Table 21]

| |
|---|
| The resource reservation interval, $P_{\text{rsvp\_TX}}$, if provided, is converted from units of msec to units of logical slots, resulting in $P'_{\text{rsvp\_TX}}$ according to clause 8.1.7. <br><br> Notation: <br><br> ( $t'^{SL}_0, t'^{SL}_1, t'^{SL}_2, ...$ ) denotes the set of slots which belongs to the sidelink resource pool and is defined in Clause 8. The following steps are used: <br><br> 1) A candidate single-slot resource for transmission $R_{X,y}$ is defined as a set of $L_{\text{subCH}}$ contiguous sub-channels with sub-channel $x+j$ in slot $t'^{SL}_y$ where $j = 0,...., L_{\text{subCH}}$ - 1. The UE shall assume that any set of $L_{\text{subCH}}$ contiguous sub-channels included in the corresponding resource pool within the time interval [$n + T_1, n + T_2$] correspond to one candidate single-slot resource, where <br><br>    - selection of $T_1$ is up to UE implementation under $0 \le T_1 \le T^{SL}_{proc,1}$ , where $T^{SL}_{proc,1}$ is defined in slots in Table 8.1.4-2 where $\mu_{SL}$ is the SCS configuration of the SL BWP; <br>    - if $T_{2min}$ is shorter than the remaining packet delay budget (in slots) then $T_2$ is up to UE implementation subject to $T_{2min} \le T_2 \le$ remaining packet delay budget (in slots); otherwise $T_2$ is set to the remaining packet delay budget (in slots). <br>    The total number of candidate single-slot resources is denoted by $M_{\text{total}}$. <br><br> 2) The sensing window is defined by the range of slots [$n - T_0$, $n - T^{SL}_{proc,0}$ ) where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. <br><br> 3) The internal parameter $Th(p_i,p_j)$ is set to the corresponding value of RSRP threshold indicated by the i-th field in *sl-Thres-RSRP-List,* where $i = p_t + (p_j - 1) * 8$. <br> 4) The set $S_A$ is initialized to the set of all the candidate single-slot resources. <br> 5) The UE shall exclude any candidate single-slot resource $R_{x,y}$ from the set $S_A$ if it meets all the following conditions: <br><br>    - the UE has not monitored slot $t'^{SL}_m$ in Step 2. <br>    - for any periodicity value allowed by the higher layer parameter *sl-ResourceReservePeriodList* and a hypothetical SCI format 1-A received in slot $t'^{SL}_m$ with *'Resource reservation period* field set to that periodicity value and indicating all subchannels of the resource pool in this slot, condition c in step 6 would be met. <br> 5a) If the number of candidate single-slot resources $R_{X,y}$ remaining in the set $S_A$ is smaller than $X \cdot M_{\text{total}}$, the set $S_A$ is initialized to the set of all the candidate single-slot resources as in step 4. |

[Table 22]

6) The UE shall exclude any candidate single-slot resource $R_{X,y}$ from the set $S_A$ if it meets all the following conditions:

    a) the UE receives an SCI format 1-A in slot $t'^{SL}_m$, and *'Resource reservation period'* field, if present, and *'Priority'* field in the received SCI format 1-A indicate the values $P_{rsvp\_Rx}$ and *prio$_{RX}$*, respectively according to Clause 16.4 in [6, TS 38.213];

    b) the RSRP measurement performed, according to clause 8.4.2.1 for the received SCI format 1-A, is higher than $Th(prio_{RX}, prio_{Tx})$;

    c) the SCI format received in slot $t'^{SL}_m$ or the same SCI format which, if and only if the *'Resource reservation period* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\_TX}}$ for q=1, 2, ..., Q and j=0, 1, ..., $C_{resel}$ - 1. Here, $P'_{rsvp\_RX}$ is $P_{rsvp\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set ($t'^{SL}_0, t'^{SL}_1, \ldots, t'^{SL}_{T'_{max}-1}$), otherwise slot $t'^{SL}_{n'}$ is the first slot after slot $n$ belonging to the set ($t'^{SL}_0, t'^{SL}_1, \ldots, t'^{SL}_{T'_{max}-1}$); otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

[Table 23]

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set ($r'_0, r'_1, r'_2, \cdots$) meets the conditions below then the UE shall report pre-emption of the resource $r'_i$ to higher layers

    - $r'_i$ is not a member of $S_A$, and

    - $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and
    - the associated priority *prio$_{RX}$*, satisfies one of the following conditions:
        - *sl-PreemptionEnable* is provided and is equal to 'enabled' and *prio$_{TX}$* > *prio$_{RX}$*
        - *sl-PreemptionEnable* is provided and is not equal to 'enabled', and *prio$_{RX}$* < *prio$_{pre}$* and *prio$_{TX}$* > *prio$_{RX}$*

[Table 24]

| $\mu_{SL}$ | $T^{SL}_{proc,0}$ [slots] |
|:---:|:---:|
| 0 | 1 |
| 1 | 1 |
| 2 | 2 |
| 3 | 4 |

[Table 25]

| $\mu_{SL}$ | $T_{proc,1}^{SL}$ [slots] |
|---|---|
| 0 | 3 |
| 1 | 5 |
| 2 | 9 |
| 3 | 17 |

On the other hand, in SL RTT positioning, a method for selecting transmission resources for two SL PRS transmissions needs to be defined.

According to one embodiment of the present disclosure, a method and a device supporting the same are proposed for selecting two SL PRS transmission resources when performing SL RTT positioning.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives a PSCCH (and/or PSSCH) (re)transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) PSSCH (and/or (NR or LTE) PSCCH) (and/or (NR or LTE) SL SSB (and/or UL channel/signal))". And, the methods proposed in the present disclosure may be used in combination with each other (in a new type of manner).

For example, the term "specific threshold" below may refer to a threshold value defined in advance or (pre-)configured by a higher layer (including an application layer) of a network, a base station, or a UE. Hereinafter, the term "specific configuration value" may refer to a value defined in advance or (pre-)configured by a higher layer (including an application layer) of a network, a base station, or a UE. Hereinafter, "configured by a network/base station" may mean an operation in which a base station configures (in advance) a UE by higher layer RRC signaling, configures/signals a UE through MAC CE, or signals a UE through DCI.

In the following disclosure, the following terms are used.

UE-triggered SL positioning - sidelink (SL) positioning where the procedure is triggered by UE

gNB-triggered SL positioning - SL positioning where the procedure is triggered by gNB/LMF

UE-controlled SL positioning - SL positioning where the SL positioning group is created by UE

gNB-controlled SL positioning - SL positioning where the SL positioning group is created by gNB

UE-based SL positioning - SL positioning where the UE position is calculated by UE

UE-assisted SL positioning - SL positioning where the UE position is calculated by gNB/LMF

SL positioning group - UEs that participates in SL positioning

Target UE (T-UE) - UE whose position is calculated

Server UE (S-UE) - UE that assists T-UE's SL positioning

MG - measurement gap where only SL PRS transmission is allowed

MW - measurement window where both SL data and SL PRS can be transmitted in a multiplexed way

According to an embodiment of the present disclosure, an SL PRS transmission resource may be composed of an SL PRS resource set composed of the following information. Or, for example, information related to SL PRS transmission resources may include some or all of the following information.

1. SL PRS resource set ID
2. SL PRS resource ID list: an SL PRS resource ID list in an SL PRS resource set
3. SL PRS resource type: it can be configured as periodic, aperiodic, semi-persistent, or on-demand.
4. Alpha value for SL PRS power control
5. P0 value for SL PRS power control
6. Pathloss reference for SL PRS power control: it can be configured as SL synchronization signal block (SSB), downlink (DL) PRS, uplink (UL) sounding reference signal (SRS), SL SRS for positioning, PSCCH DMRS, PSSCH DMRS, PSFCH, or SL CSI RS etc.

According to an embodiment of the present disclosure, an SL PRS resource set may be composed of an SL PRS resource composed of the following information. Or, for example, information related to the SL PRS transmission resource may include some or all of the following information.

1. SL PRS resource ID
2. SL PRS comb size: an interval between REs at which an SL PRS is transmitted within a symbol.
3. SL PRS comb offset: an index of a RE at which an SL PRS is initially transmitted within the first SL PRS symbol.
4. SL PRS comb cyclic shift: cyclic shift used to generate the sequence constituting the SL PRS.
5. SL PRS start position: an index of the first symbol in which SL PRS is transmitted within one slot.
6. SL PRS #symbol: the number of symbols constituting SL PRS within one slot
7. Frequency domain shift: position (of an index) of the lowest frequency at which SL PRS is transmitted in the frequency domain
8. SL PRS BW: Frequency Bandwidth Used for SL PRS Transmission
9. SL PRS resource type: it can be configured as periodic, aperiodic, semi-persistent, or on-demand.
10. SL PRS periodicity: it is a period in the time domain between SL PRS resources, and has a physical or logical slot unit of a resource pool in which the SL PRS is transmitted.
11. SL PRS offset: Reference timing Reference, an offset in the time domain to the start of the first SL PRS resource, and it has units of physical or logical slots of resource pools in which SL PRSs are transmitted. For example, the reference timing may be SFN = 0, DFN = 0, or a successful reception or decoding time of RRC/MAC CE/DCI/SCI related to the SL PRS resource.
12. SL PRS sequence ID
13. SL PRS spatial relation: It can be configured to SL SSB, DL PRS, UL SRS, UL SRS for positioning, PSCCH DMRS, PSSCH DMRS, PSFCH, or SL CSI RS.
14. SL PRS CCH: SL PRS control channel. For example, SL PRS resource configuration information and resource location may be signaled through the SL PRS CCH.

According to one embodiment of the present disclosure, when performing SL RTT positioning, an operation in which a UE#1 transmits an SL PRS#1 to a UE#2, and after the UE#2 receives the SL PRS#1, the UE#2 transmits an SL PRS#2 to the UE# 1 may be required.

According to one embodiment of the present disclosure, when an SL RTT is performed as described above, in the case where a resource selection for transmitting the SL PRS#1 is triggered by the UE#1, the UE#1 may select transmission resources for transmitting both the SL PRS#1 and the SL PRS#2 on a sensing basis. Alternatively, for example, the UE#1 may be allocated with transmission resources for transmitting both the SL PRS#1 and the SL PRS#2 by a base station.

For example, in the case described above, information for the SL PRS#2 transmission resource may be indicated via SL PRS CCH#1 linked to the SL PRS#1 transmitted by UE# 1. For example, the SL RRS#2 transmission resource information may include linked SL PRS resource configuration information and/or the SL PRS#2 transmission resource location information.

For example, the SL PRS CCH#1 may indicate an offset from an SL slot or symbol in which the SL PRS#1 is transmitted to an SL slot or symbol in which the SL PRS#2 is transmitted. For example, the offset may be in units of SL logical slots or symbols, or may be in absolute time units (e.g., ms).

For example, if the resource pools to which the two PRSs are transmitted are different, the SL PRS CCH#1 may include an index of the resource pool to which the SL PRS#2 is transmitted. For example, in the case described above, the offset may be determined based on a numerology(SCS) configured in the resource pool in which the SL PRS#2 is transmitted. For example, the offset value may be (pre-)configured to a resource pool, or may be configured to the UE# 1 and/or the UE#2 by the network.

For example, in the case described above, the offset value may be configured/determined by considering the following.

1. Targeted positioning accuracy or targeted positioning error

2. Latency requirements linked to the SL RTT

3. Priority linked to the SL RTT

4. BW, the number of logical slots and/or symbols, linked to a resource which is to be used to the SL RTT

5. The speed or linked Doppler spread of the UE#1 and/or the UE#2

6. Channel delay spread of a transmission channel on which the SL PRS#1 and SL PRS#2 are to be transmitted.

7. Congestion level (CBR) of a transmission channel on which the SL PRS# 1 and SL PRS#2 are to be transmitted

8. The number of UEs performing SL positioning in a transmission channel/resource pool on which the SL PRS#1 and SL PRS#2 are to be transmitted

9. The distance between the UE#1 and UE#2 (e.g., Zone ID based)

According to one embodiment of the present disclosure, in order to reduce the complexity of the sensing operation for resource selection and to reduce the additional signaling overhead for the SL PRS resource configuration information, the configuration information of the SL PRS#2 resource may always be determined the same as the configuration information of the SL PRS#1 resource. For example, in order to improve SL positioning performance by transmitting SL PRS based on resources with lower interference and noise levels in a resource pool, the SL PRS#2 resource configuration information may be determined independently of the SL PRS#1 resource configuration information, and the determination may be based on the conditions of the transmission channel.

According to one embodiment of the present disclosure, the SL PRS#2 resource may be configured/determined to be located after a minimum time gap from the SL PRS#1 resource, considering the UE processing time related to the SL PRS# 1 resource.

For example, if the previously selected SL PRS#1 resource is reselected due to resource re-evaluation or preemption, and if the time interval with the previously selected SL PRS#2 resource becomes smaller than the above minimum time gap, a UE may perform the following operations.

1. the UE may also reselect the previously selected SL PRS#2 resource so that the resulting time interval with the reselected SL PRS#1 resource is greater than or equal to the minimum time gap.

2. when reselecting the previously selected SL PRS# 1 resource, the UE may reselect the SL PRS# 1 resource from among the transmission resources whose time interval with the previously selected SL PRS#2 resource is greater than or equal to the minimum time gap.

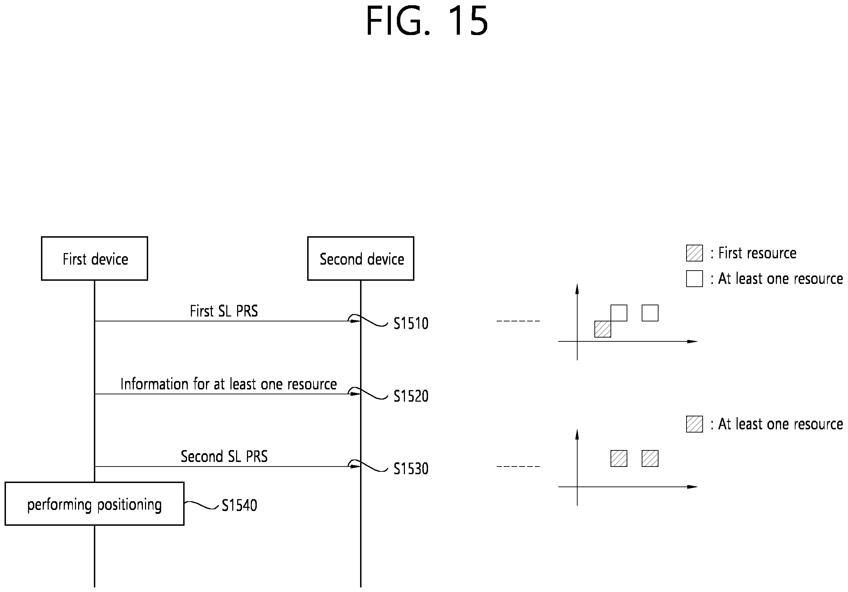

FIG. 15 shows a procedure for a first device to share a resource for receiving a second SL PRS, according to one embodiment of the present disclosure. The embodiment of FIG. 15 may be combined with various embodiments of the present disclosure.

Referring to FIG. 15, a first device and a second device are shown. For example, the first device and the second device may be devices belonging to a positioning group for positioning of the first device. For example, the first device may transmit to the second device a positioning group participation message indicating a cause to participate the positioning group for positioning of the first device. For example, the second device may transmit, in response to the position group participation message, a position group accept message to the first device. Thus, in this embodiment, the first device and the second device may be in a state of being included in a positioning group.

In step S1510, the first device may transmit a first SL PRS to the second device, based on a first resource. And, in step S1520, the first device may transmit, via a control channel related to the first SL PRS, information for at least one resource to the second device. For example, the first resource and the at least one resource may be a resource reserved by the first device. For example, the first resource and the at least one resource may be resources selected by the first device based on sensing.

In step S1530, the second device may transmit a second SL PRS to the first device based on the received at least one resource. In step S1540, the first device may perform positioning for the first device based on the first SL PRS and the second SL PRS. With this embodiment, the delay caused by the operation of selecting a resource to which the first SL PRS and the second SL PRS may be transmitted may be reduced, and thus a faster positioning operation may be performed.

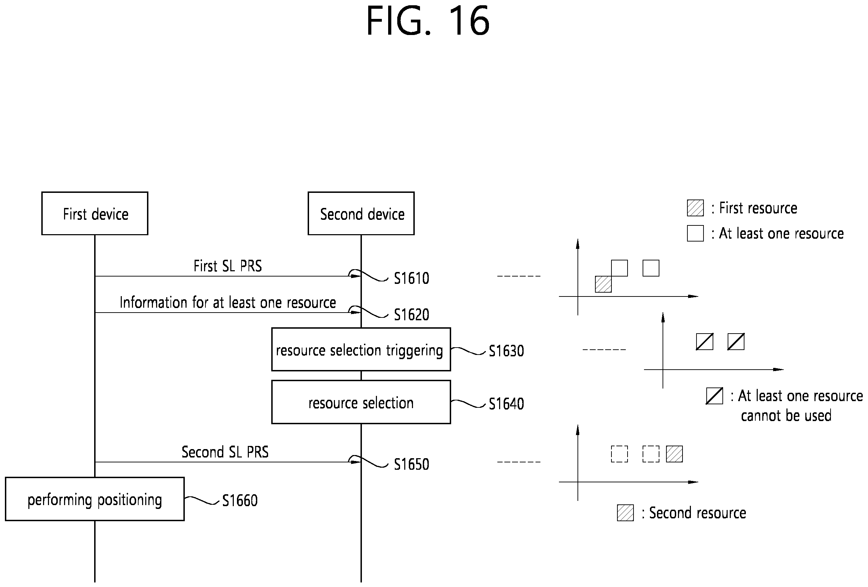

FIG. 16 shows a procedure for a second device to transmit a second SL PRS, according to one embodiment of the present disclosure. The embodiment of FIG. 16 may be combined with various embodiments of the present disclosure.

Referring to FIG. 16, a first device and a second device are shown. For example, the first device and the second device may be devices belonging to a positioning group for positioning of the first device. For example, the first device may transmit to the second device a positioning group participation message with a cause to participate a positioning group for positioning of the first device. For example, the second device may transmit, in response to the positioning group participation message, a positioning group accept message to the first device. Thus, in this embodiment, the first device and the second device may be in a state of being included in a positioning group.

In step S1610, the first device may transmit a first SL PRS to the second device based on a first resource. And, in step S1620, the first device may transmit, via a control channel related to the first SL PRS, information for at least one resource to the second device. For example, the first resource and the at least one resource may be a resource reserved by the first device. For example, the first resource and the at least one resource may be resources selected by the first device based on sensing.

In step S1630, the second device may attempt to transmit a second SL PRS based on the at least one resource. If the attempt is failed with all of the at least one resource, for example due to prioritization, the second device may trigger resource selection.

At step S1640, the second device may perform sensing and select a second resource based on the result of the sensing. In step S1650, the second device may transmit a second SL PRS to the first device based on the second resource. In step S1660, the first device may perform positioning for the first device based on the first SL PRS and the second SL PRS.

According to one embodiment of the present disclosure, when performing an SL RTT as described above, when resource selection for the UE#1 to transmit the SL PRS#1 is triggered, the UE#1 may select only a transmission resource for transmitting the SL PRS#1 on a sensing basis. For example, the UE#1 may only be allocated with a transmission resource for transmitting the SL PRS#1 by a base station.

After the transmission resource for transmission of SL PRS#1 is determined as described above, the transmission resource for transmission of SL PRS#2 may be determined by a (pre-)configured rule based on the transmission resource for transmission of SL PRS#1. For example, the transmission resource for the SL PRS#2 may be determined based on the same configuration information as the SL PRS resource configuration information applied to the transmission resource for the SL PRS#1. For example, the transmission resource for the SL PRS#2 may be determined based on the logical slot included in the earliest resource pool after an offset expressed in terms of logical slots, that is (pre-)set in a resource pool and included in the resource pool, from the transmission resource for the SL PRS# 1.

For example, when performing SL RTT based positioning, UE#1 may signal to UE#2 by selecting one or more candidate resources for the SL PRS#2 transmission. For example, the one or more candidate resources for the SL PRS#2 transmission may all be determined based on the same SL PRS resource configuration information (e.g., comb size or number of symbols). For example, the all the same SL PRS resource configuration information may be the SL PRS# 1 resource configuration information. For example, one or more candidate resources for the SL PRS#2 transmission may be determined based on each independent SL PRS resource configuration information (e.g., comb size or symbol count) optimized for transmission for each candidate resource. For example, at least one of the independent SL PRS resource configuration information may be the SL PRS#1 resource configuration information.

For example, in the case described above, the UE#2 may select a resource for the final SL PRS#2 transmission from among the candidate SL PRS#2 transmission resources signaled by the UE# 1. For example, the UE#2 may select the resource for the final SL PRS#2 transmission by considering both the candidate SL PRS#2 transmission resource information signaled by the UE#1 and its own sensing information. For example, the UE#2 may report the candidate SL PRS#2 transmission resource information signaled by the UE# 1 to a base station, so that the base station may allocate the final SL PRS#2 transmission resource by considering the above information.

For example, in the case described above, the UE#1 may select one or more candidate resources for the SL PRS#2 transmission within the SL DRX active time of the UE#2.

According to one embodiment of the present disclosure, when performing SL RTT-based positioning, the UE#1 may select the SL PRS#1 resource on a sensing basis or be configured with it by a base station, and the UE#2 may select the SL PRS#2 resource on a sensing basis or be configured with it by a base station. For example, when the UE#2 receives the SL PRS#1 from the UE#1, the UE#2 may request a transmission resource for transmitting the SL PRS#2 from a base station. For example, the request to a base station by the UE#2 may be performed at a time within a specific threshold value after the time point at which the SL PRS#1 is received. For example, UE#2 may select a transmission resource based on sensing or be allocated with a transmission resource by a base station from among resources located after a minimum time gap between the SL PRS# 1 and the SL PRS#2 from the time point at which the SL PRS# 1 is received.

For example, the minimum time gap may be indicated by an SL PRS CCH#1 transmitted by the UE#1, which is received by the UE#2, and the UE#2 that has received it may report the minimum time gap to a base station to be allocated with the SL PRS#2 transmission resources located after the minimum time gap.

According to various embodiments of the present disclosure, a method for efficiently selecting two SL PRS transmission resources for SL RTT positioning is proposed.

On the other hand, in SL RTT positioning, when UE-A selects the first SL PRS transmission resource based on sensing and transmits an SL PRS, there is a problem that the second SL PRS transmission resource may not be secured when the counterpart UE-B receives the first SL PRS and attempts to transmit the second SL PRS.

According to one embodiment of the present disclosure, a method and a device supporting the same are proposed for signaling to a counterpart UE-B that when a UE-A in SL RTT positioning selects a first SL PRS transmission resource based on sensing to transmit a SL PRS, the counterpart UE-B receives the first SL PRS and reserves a transmission resource for transmitting the second SL PRS.

All operations of this disclosure may be equally applicable to operations where a UE-A transmits reservation information to a UE-B, by reserving a transmission resource for the UE-B to transmit a measurement result, in case the UE-A transmits an SL PRS and the UE-B receives the SL PRS and transmits the measurement results based on the SL PRS to the UE-A.

According to one embodiment of the present disclosure, when SL RTT positioning is performed, when a UE-A transmits the first SL PRS to a UE-B, after the UE-B receives the first SL PRS, the UE-B may perform an operation to transmit the second SL PRS to the UE-A. For example, in the case described above, i.e., after the UE-B receives the first SL PRS, there may not be sufficient time for the UE-B to select the second SL PRS transmission resource within a time that satisfies the latency requirements related to the SL RTT-based positioning service (e.g., time for sensing may be required).

According to one embodiment of the present disclosure, in order to solve the above-mentioned problem, when transmitting the first SL PRS, the UE-A may determine, on a sensing basis, not only the first SL PRS transmission resource, but also the second SL PRS transmission resource to be transmitted by the UE-B, and transmit to the UE-B reservation information for the second SL PRS transmission resource.

According to one embodiment of the present disclosure, in the above case, if the UE-B repeatedly transmits the second SL PRS more than a (pre-)configured specific threshold number of times, the UE-A may reserve a resource for only the initial the second SL PRS transmission resource among the repeatedly transmitted second SL PRSs and inform the UE-B of the resource reservation information. For example, in the case described above, the UE-B may select the remaining second SL PRS repeated transmission resources, other than the initial transmission, based on its own sensing basis, or may request and be allocated with the remaining repeated transmission resources from the base station or LMF.

According to one embodiment of the present disclosure, in the case described above, the UE-A may reserve one or more SL PRS candidate resources linked to the second SL PRS to be transmitted by the UE-B and transmit the reserved candidate resource information to the UE-B. For example, the number of the one or more second SL PRS candidate resources may be (pre-)configured in a resource pool.

According to one embodiment of the present disclosure, the number of the one or more second SL PRS candidate resources may be determined by the UE-A based on the following.

1. Targeted positioning accuracy or targeted positioning error
2. Latency requirement linked to the SL RTT positioning
3. Priority linked to the first and/or second SL PRS
4. BW, the number of logical slots and/or symbols linked to a resource pool on which the first and/or second SL PRS are transmitted
5. The speed or linked Doppler spread of the UE which is to select the first and/or second SL PRS transmission resources
6. The channel delay spread linked to the channel/resource pool on which the first and/or second SL PRS is to be transmitted.
7. The congestion level (CBR) linked to the channel/resource pool on which the first and/or second SL PRS is to be transmitted.
8. The number of UEs performing SL positioning within the channel/resource pool on which the first and/or second SL PRS is to be transmitted.
9. the distance between the UEs to perform positioning by transmitting the first and/or second SL PRS (e.g., zone ID-based)

For example, in the case described above, when the UE-A operates in the mode of selecting the SL PRS transmission resource based on sensing, the UE-A may perform the following operations.

1. the UE-A may reserve the one or more SL PRS candidate resources for the second SL PRS to be transmitted by the UE-B based on its sensing, and transmit the reserved candidate resource information to the UE-B.
2. In the case described above, the UE-A may signal, via the first SL PRS CCH linked to the first SL PRS transmission, whether an SL PRS resource reserved by the first SL PRS CCH is a resource linked to the first SL PRS transmission of the UE-A or a resource linked to the second SL PRS transmission of the UE-B.
3. In any of the above cases, the UE-A may reserve a number of SL PRS candidate resources within the UE-B's SL DRX on-duration or active interval that is greater than or equal to a specific threshold value. For example, the specific threshold value may be configured/selected to be less than or equal to the number of the one or more second SL PRS candidate resources.

In the case described above, when the UE-A is operating in the mode of receiving SL PRS transmission resource allocation from a base station or LMF, the UE-A may perform the following operations.

1. When the UE-A is allocated with an SL PRS transmission resource by a base station or LMF, the UE-A may report the first SL PRS configuration information and the second SL PRS configuration information to the base station or LMF, request one or more second SL PRS candidate resources and be allocated with the resource, and transmit the allocated candidate resource information to UE-B.

2. In any of the above cases, the UE-A may report the number of the second SL PRS candidate resources to the base station or LMF. For example, the UE-A may expect to be allocated with a number of SL PRS candidate resources that is greater than or equal to the number of resources reported to the base station or LMF, from the base station or LMF.

3. In any of the above cases, the UE-A may report SL DRX information, including information on SL DRX on-duration or active interval of the UE-B, to the base station or LMF. For example, the UE-A may expect to be allocated with SL PRS candidate resources within the reported SL DRX on-duration or active interval from the base station or LMF.

For example, in the case described above, when the UE-B operates in the mode of selecting SL PRS transmission resource based on sensing, the UE-B may perform the following operations.

According to one embodiment of the present disclosure, the UE-B may, from a set of the one or more reserved second SL PRS candidate resources received from the UE-A, exclude candidate resources that conflict with the UE-B's own other transmission time points (excluding resources that cause a half-duplex problem), report the remaining candidate resources to the MAC layer as final candidate resources, and randomly select the second SL PRS transmission resource from the final candidate resources.

For example, in the case described above, if there are no resources left after excluding the resources, the UE-B may report final candidate resources for the second SL PRS transmission to the MAC layer, from among the one or more reserved second SL PRS candidate resources received from the UE-A, based on a priority value #1 linked to the second SL PRS resource and a priority value #2 linked to another transmission of the UE-B, and select a transmission resource from among the final candidate resources. For example, if the priority value #1 is smaller than the priority value #2, the conflicting candidate resources may be reported to the MAC layer as final candidate resources, and the second SL PRS transmission resource may be randomly selected among the final candidate resources.

According to one embodiment of the present disclosure, the UE-B may report the remaining resources after excluding non-preferred resources that are indicated as not suitable for the UE-B to transmit, transmitted to the UE-B from other UEs, from the one or more reserved second SL PRS candidate resource sets received from the UE-A, to the MAC layer as final candidate resources, and randomly select the second SL PRS transmission resource from the final candidate resources.

For example, in the above case, if there are no resources left after excluding the resources, final candidate resources may be reported to the MAC layer, based on priority value #1 linked to the second SL PRS resource and priority value #3 linked to a resource indicated to be unsuitable for UE-B to transmit, transmitted to the UE-B from the other UE, from among the one or more reserved second SL PRS candidate resources received from the UE-A, and among the final candidate resources, the second SL PRS transmission resource may be selected. For example, if the priority value #1 is smaller than the priority value #3, the conflicting candidate resources may be reported to the MAC layer as final candidate resources, and the second SL PRS transmission resource may be selected randomly among the final candidate resources.

According to one embodiment of the present disclosure, the UE-B may report SL PRS candidate resources belonging to the intersection between the one or more reserved second SL PRS candidate resource sets received from the UE-A and the second SL-PRS candidate resource sets selected by the UE-B based on its sensing as final candidate resources to the MAC layer, and, among the final candidate resources, select and transmit the second SL PRS transmission resource.

For example, in the case described above, the UE-B may randomly select the second SL PRS transmission resource at the intersection. For example, the UE-B may UE-implementatively select the second SL PRS transmission resource within the intersection.

For example, in the case described above, if the intersection does not exist, the UE-B may generate the intersection by increasing the number of candidate resources belonging to the second SL-PRS candidate resource set selected by the UE-B based on its sensing, by increasing the last RSRP threshold value used to select the second SL-PRS transmission resource based on its sensing by a specific setting value.

For example, in the case described above, if the intersection does not exist, the UE-B may report the one or more reserved second SL PRS candidate resource sets received from the UE-A to the MAC layer as final candidate resources, and randomly select the second SL PRS transmission resource from the final candidate resources.

According to one embodiment of the present disclosure, the UE-B may report one or more second SL PRS candidate resource sets reserved by the UE-A to the MAC layer as final candidate resources, and may select the SL PRS transmission resource from the final candidate resources. For example, the operation may be limited to cases where the UE-A does not have a sensing capability.

According to one embodiment of the present disclosure, when the UE-B is operating in SL DRX mode, the UE-A may report resources belonging to an SL DRX on-duration or active interval of the UE-B as final candidate resources to the MAC layer from a set of the one or more reserved second SL PRS candidate resource sets received from UE-A, and may select the second SL PRS transmission resource from the final candidate resources. For example, the selection may be made randomly.

For example, in the case described above, if the UE-B is operating in the mode of being allocated with an SL PRS transmission resource from a base station or LMF, the UE-B may perform the following operations.

According to one embodiment of the present disclosure, a UE-B may report the first SL PRS configuration information and the second SL PRS configuration information to the base station or LMF, request and be allocated with the second SL PRS transmission resource, and then, if the allocated transmission resource is included in the one or more reserved second SL PRS candidate resource sets received from the UE-A, transmit the second SL PRS using the allocated transmission resource.

For example, in the case described above, if the allocated transmission resource is not included in the one or more reserved second SL PRS candidate resource sets received from the UE-A, the UE-B may re-request the second SL PRS transmission resource from the base station or LMF.

According to one embodiment of the present disclosure, a UE-B may report the first SL PRS configuration information and the second SL PRS configuration information to the base station or LMF, request and be allocated with the one or more second SL PRS candidate resources, report the intersection between the allocated resource set and the one or more reserved second SL PRS candidate resource sets received from the UE-A as final candidate resources, and select the second SL PRS transmission resource randomly from among the final candidate resources.

For example, in the case described above, if the intersection does not exist, the UE-B may select the second SL PRS candidate resource based on its own sensing and select the second SL PRS transmission resource as described above in the case of "When the UE-B operates in the mode of selecting an SL PRS transmission resource based on sensing".

According to one embodiment of the present disclosure, a UE-B may report the first SL PRS configuration information and the second SL PRS configuration information to the base station or LMF, and after reporting to the base station or LMF the one or more reserved second SL PRS candidate resource sets received from the UE-A, the UE-B may transmit the second SL PRS using a transmission resource allocated to the UE-B by the base station or LMF considering the information.

For example, in any of the above cases, the one or more reserved second SL PRS candidate resource sets received from the UE-A that have been reported to the base station or LMF may replace the resource request to the base station or LMF.

According to various embodiments of the present disclosure, in SL RTT positioning, when a UE-A selects a first SL PRS transmission resource based on sensing to transmit an SL PRS, a method of increasing the probability that a counterpart UE-B can transmit a second SL PRS by reserving a transmission resource on which the UE-B can receive the first SL PRS and transmit the second SL PRS is proposed.

On the other hand, after UE-A performs the first SL PRS transmission to UE-B in SL RTT, a method for selecting a resource for UE-B to transmit the second SL PRS to UE-A needs to be defined.

According to one embodiment of the present disclosure, in the case of SL RTT positioning, a method and a device for efficiently selecting a second SL PRS resource based on the first SL PRS transmission are proposed.

For example, when SL RTT positioning is performed, when UE-A transmits the first SL PRS to UE-B, the UE-B may, after receiving the first SL PRS, perform the operation of transmitting the second SL PRS to the UE-A.

According to one embodiment of the present disclosure, in the above-described case, the second SL PRS resource configuration information transmitted by the UE-B may be determined the same as the first SL PRS resource configuration information transmitted by the UE-A.

According to one embodiment of the present disclosure, the UE-B may determine the second SL PRS resource configuration information based on (considering) the following items.

1. The congestion level (CBR) of the transmission channel on which the second SL PRS is to be transmitted
2. The priority linked to the SL RTT positioning or the second SL PRS
3. BW of the BWP or resource pool in which the second SL PRS is transmitted
4. Reception quality of the first SL PRS

    4.1. For example, the correlation value between the first SL PRS received above and the first SL PRS sequence already promised above
    4.2. For example, the accuracy/reliability/range of error of the measured value based on the first SL PRS above

5. Reception quality of the SL RTT positioning request signal or channel received from the UE-A, linked to the SL RTT positioning
5.1. For example, RSRP of the channel or reception quality above

6. The latency requirement linked to the above SL RTT positioning or the above second SL PRS
7. The result of the sensing performed by the UE-B to select the second SL PRS transmission resource

    7.1. The number of available candidate resources in the resource pool for the above second SL PRS transmission
    7.2. The (final) RSRP threshold used in the sensing-based resource selection procedure performed to select the second SL PRS transmission resource above

8. The relative distance between UE-A and UE-B above
8.1. the relative distance estimated by the UE-B based on the zone ID to which the UE-A belongs, indicated by the SL PRS CCH linked to the first SL PRS transmitted by the UE-A
9. Configuration information for the second SL PRS resource, indicated by the SL PRS CCH linked to the first SL PRS transmitted by the UE-A

According to one embodiment of the present disclosure, if the UE-A has reserved the second SL PRS transmission resource to be transmitted by the UE-B and has indicated the resource reservation information to the UE-B, the UE-B may not transmit the SL PRS CCH linked to the second SL PRS when transmitting the second SL PRS.

According to one embodiment of the present disclosure, when a UE performing SL positioning in a resource pool transmits an SL PRS and does not transmit an SL PRS CCH linked to the SL PRS, when any UE in the resource pool performs sensing for the transmission of an SL PRS, the any UE may perform sensing for SL PRS candidate resources in the resource pool itself.

For example, in the case where a UE transmits an SL PRS without transmitting a linked SL PRS CCH as described above, when performing sensing for selecting the SL PRS transmission resource or performing a blind detection operation for detecting an SL PRS that the UE needs to receive, the following operations may be performed.

According to one embodiment of the present disclosure, a UE may perform the sensing or blind detection based on SL PRS resource configuration information or SL PRS sequences configured for SL positioning groups in which the UE participates in the resource pool.

According to one embodiment of the present disclosure, the UE may perform the sensing or blind detection based on SL PRS resource configuration information or SL PRS sequence configured for the SL positioning operation, based on the SL positioning operation performed by the UE.

For example, the SL positioning operation may be SL TDOA or SL RTT or SL UE ID or SL AoA/ZoA or SL AoD/ZoD based positioning.

According to one embodiment of the present disclosure, a UE may perform the sensing or blind detection based on SL PRS resource configuration information or an SL PRS sequence configured for the zone ID of the zone to which the UE belongs.

For example, in the case of SL RTT positioning, a UE may perform the sensing or blind detection based on SL PRS resource configuration information or an SL PRS sequence configured for the zone ID of the zone to which the counterpart UE belongs.

According to one embodiment of the present disclosure, as described above, the operation wherein a UE transmits an SL PRS without a linked SL PRS CCH, and performs sensing or blind detection for an SL PRS transmission resource by itself, without detection for an SL PRS CCH, may be limited to cases where the SL PRS resources are configured to be transmitted repeatedly by a (pre-) configured number of times in a resource pool. For example, the operation may be limited to the case where periodic SL PRS transmissions or semi-persistent SL PRS transmissions are allowed in the resource pool. For example, the above operation may be limited to the case where the SL PRS is configured to be retransmitted a (pre-)configured number of times.

According to one embodiment of the present disclosure, a UE selecting an SL PRS resource from a resource pool for an SL PRS transmission on a sensing basis may transmit only a part of the SL PRS resource in the initial transmission of the SL PRS and the remaining part of the SL PRS resource in the retransmission of the SL PRS. For example, in the case described above, the RE resources comprising the SL PRS resources may be divided into N, the number of retransmissions, groups of retransmission times and transmitted separately in the initial transmission and retransmission. For example, the N value may be (pre-)configured in the resource pool. For example, the N value may be selected by the UE based on the following conditions.

1. Targeted positioning accuracy or targeted positioning error
2. Latency requirements linked to SL positioning above
3. Priority linked to the SL PRS above
4. BW, the number of logical slots and/or symbols linked to the resource pool on which the above SL PRS is to be transmitted.
5. The speed or linked Doppler spread of a UE that is about to select the SL PRS transmission resource above.

6. Channel delay spread linked to a channel/resource pool on which the SL PRS is transmitted

7. The congestion level (CBR) linked to a channel/resource pool on which the SL PRS is transmitted

8. The number of UEs performing SL positioning within a channel/resource pool on which the SL PRS is transmitted

9. The distance between UEs that are to perform positioning by transmitting the SL PRS (e.g., zone ID-based)

For example, the N value may be selected based on "What UE-B considers to determine the second SL PRS resource configuration information in SL RTT positioning" above.

According to one embodiment of the present disclosure, when SL PRS resources are divided into N groups and transmitted as described above, and the UE selects one of the N groups for initial and retransmission, the UE may preferentially select a group that has not yet been transmitted over a group that has already been transmitted.

For example, in the case described above where a UE selects one of the N groups for initial and retransmission, the UE may select the group to transmit based on the RSRP for each of the N groups or the correlation value with the SL PRS sequence comprising the SL PRS resource.

For example, in the case described above, a UE may retransmit an already transmitted group only if the RSRP measurement value of the already transmitted group is less than or equal to the RSRP measurement value of the not yet transmitted group and less than or equal to a specific (pre-)configured threshold value.

According to various embodiments of the present disclosure, a method for transmitting SL PRS in an SL RTT operation without overhead caused by the SL PRS CCH and a method for efficiently selecting the second SL PRS resource without sensing for an SL PRS CCH are proposed.

In the positioning operation, a selection operation of the SL PRS resource needs to be defined for fast positioning speed. According to one embodiment of the present disclosure, by a device in need of positioning reserving transmission resources of a first SL PRS and a second SL PRS simultaneously by itself, the time required for the device to transmit the second SL PRS to perform resource selection can be reduced, thereby enabling a faster positioning operation.

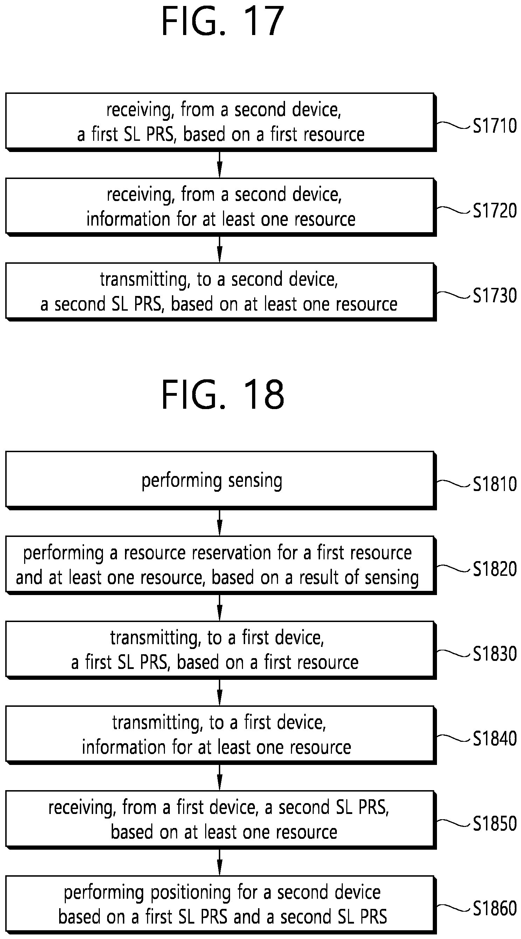

FIG. 17 shows a procedure for a first device to perform wireless communication, according to one embodiment of the present disclosure. The embodiment of FIG. 17 may be combined with various embodiments of the present disclosure.

Referring to FIG. 17, in step S 1710, a first device may receive, from a second device, a first sidelink, SL, positioning reference signal, PRS, based on a first resource. In step S1720, the first device may receive, from the second device, information for at least one resource. In step S1730, the first device may transmit, to the second device, a second SL PRS, based on the at least one resource

For example, the first resource and the at least one resource may be selected by the second device based on sensing.

For example, the first resource and the at least one resource may be resources allocated by a base station.

For example, the information for the at least one resource may include a resource pool index related to the at least one resource or an offset value of the at least one resource from the first resource.

For example, the information for the at least one resource may be received through a control channel related to the first SL PRS.

For example, the information for the at least one resource may include information for an SL PRS resource configuration or a location of the at least one resource.

For example, the information for the at least one resource may include information for a resource related to the at least one resource, based on a resource pool related to the first resource and a resource pool related to the at least one resource being different.

For example, an offset value of the at least one resource from the first resource may be determined based on numerology of the resource pool related to the at least one resource, based on the resource pool related to the first resource and the resource pool related to the at least one resource being different.

For example, the offset value may be determined based on a priority or a latency requirement related to an SL PRS.

For example, a time distance between the at least one resource and the first resource may be greater than equal to a minimum gap.

For example, additionally, the first device may select at least one second resource based on sensing, based on all transmission for the second SL PRS being failed based on the at least one resource. For example, the second SL PRS may be transmitted based on the at least one second resource.

For example, the first resource may be a resource to which a second resource is reselected by the second device, the at least one resource may be a resource to which a third resource is reselected by the second device, based on an interval between the first resource and the third resource being smaller than a threshold value, and the second resource and the third resource may be reserved by the second device.

For example, the first resource may be a resource to which a second resource is reselected by the second device, and the second resource may be reselected to the first resource such that an interval between the second resource and the at least one resource is greater than equal to a threshold value.

The embodiments described above may be applied to various devices described below. First, a processor 102 of a first device 100 may control a transceiver 106 to receive, from a second device 200, a first sidelink, SL, positioning reference signal, PRS, based on a first resource. And, the processor 102 of the first device 100 may control the transceiver 106 to receive, from the second device 200, information for at least one resource. And, the processor 102 of the first device 100 may control the transceiver 106 to transmit, to the second device 200, a second SL PRS, based on the at least one resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a first sidelink, SL, positioning reference signal, PRS, based on a first resource; receiving, from the second device, information for at least one resource; and transmitting, to the second device, a second SL PRS, based on the at least one resource.

For example, the first resource and the at least one resource may be selected by the second device based on sensing.

For example, the first resource and the at least one resource may be resources allocated by a base station.

For example, the information for the at least one resource may include a resource pool index related to the at least one resource or an offset value of the at least one resource from the first resource.

For example, the information for the at least one resource may be received through a control channel related to the first SL PRS.

For example, the information for the at least one resource may include information for an SL PRS resource configuration or a location of the at least one resource.

For example, the information for the at least one resource may include information for a resource related to the at least one resource, based on a resource pool related to the first resource and a resource pool related to the at least one resource being different.

For example, an offset value of the at least one resource from the first resource may be determined based on numerology of the resource pool related to the at least one resource, based on the resource pool related to the first resource and the resource pool related to the at least one resource being different.

For example, the offset value may be determined based on a priority or a latency requirement related to an SL PRS.

For example, a time distance between the at least one resource and the first resource may be greater than equal to a minimum gap.

For example, additionally, the operations further comprise: selecting at least one second resource based on sensing, based on all transmission for the second SL PRS being failed based on the at least one resource. For example, the second SL PRS may be transmitted based on the at least one second resource.

For example, the first resource may be a resource to which a second resource is reselected by the second device, the at least one resource may be a resource to which a third resource is reselected by the second device, based on an interval between the first resource and the third resource being smaller than a threshold value, and the second resource and the third resource may be reserved by the second device.

For example, the first resource may be a resource to which a second resource is reselected by the second device, and the second resource may be reselected to the first resource such that an interval between the second resource and the at least one resource is greater than equal to a threshold value.

According to an embodiment of the present disclosure, a device adapted to control a first user equipment, UE, may be proposed. For example, the device may comprise: at least one processor; and at least one memory operably connected to the at least one processor and storing instructions. For example, the instructions, based on being executed by the at least one processor, may cause the first UE to: receive, from a second UE, a first sidelink, SL, positioning reference signal, PRS, based on a first resource; receive, from the second UE, information for at least one resource; and transmit, to the second UE, a second SL PRS, based on the at least one resource.

According to an embodiment of the present disclosure, a non-transitory computer-readable storage medium storing instructions may be proposed. For example, the instructions, based on being executed, may cause a first device to: receive, from a second device, a first sidelink, SL, positioning reference signal, PRS, based on a first resource; receive, from the second device, information for at least one resource; and transmit, to the second device, a second SL PRS, based on the at least one resource.

FIG. 18 shows a procedure for a second device to perform wireless communication, according to one embodiment of the present disclosure. The embodiment of FIG. 18 may be combined with various embodiments of the present disclosure.

Referring to FIG. 18, in step S1810, a second device may perform sensing. In step S1820, the second device may perform a resource reservation for a first resource and at least one resource, based on a result of the sensing. In step S1830, the second device may transmit, to a first device, a first sidelink, SL, positioning reference signal, PRS, based on the first resource. In step S1840, the second device may transmit, to the first device, information for the at least one resource. In step S1850, the second device may receive, from the first device, a second SL PRS, based on the at least one resource. In step S1860, the second device may perform positioning for the second device based on the first SL PRS and the second SL PRS.

For example, the information for the at least one resource may include a resource pool index related to the at least one resource or an offset value from the first resource of the at least one resource.

The embodiments described above may be applied to various devices described below. First, a processor 202 of a second device 200 may perform sensing. And, the processor 202 of the second device 200 may perform a resource reservation for a first resource and at least one resource, based on a result of the sensing. And, the processor 202 of the second device 200 may control a transceiver 206 to transmit, to a first device 100, a first sidelink, SL, positioning reference signal, PRS, based on the first resource. And, the processor 202 of the second device 200 may control the transceiver 206 to transmit, to the first device 100, information for the at least one resource. And, the processor 202 of the second device 200 may control the transceiver 206 to receive, from the first device 100, a second SL PRS, based on the at least one resource. And, the processor 202 of the second device 200 may perform positioning for the second device 200 based on the first SL PRS and the second SL PRS.

According to an embodiment of the present disclosure, a second device for performing wireless communication may be proposed. For example, the first device may comprise: at least one transceiver; at least one processor; and at least one memory operably connected to the at least one processor and storing instructions that, based on being executed by the at least one processor, cause the second device to perform operations. For example, the operations may comprise: performing sensing; performing a resource reservation for a first resource and at least one resource, based on a result of the sensing; transmitting, to a first device, a first sidelink, SL, positioning reference signal, PRS, based on the first resource; transmitting, to the first device, information for the at least one resource; receiving, from the first device, a second SL PRS, based on the at least one resource; and performing positioning for the second device based on the first SL PRS and the second SL PRS.

For example, the information for the at least one resource may include a resource pool index related to the at least one resource or an offset value from the first resource of the at least one resource.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

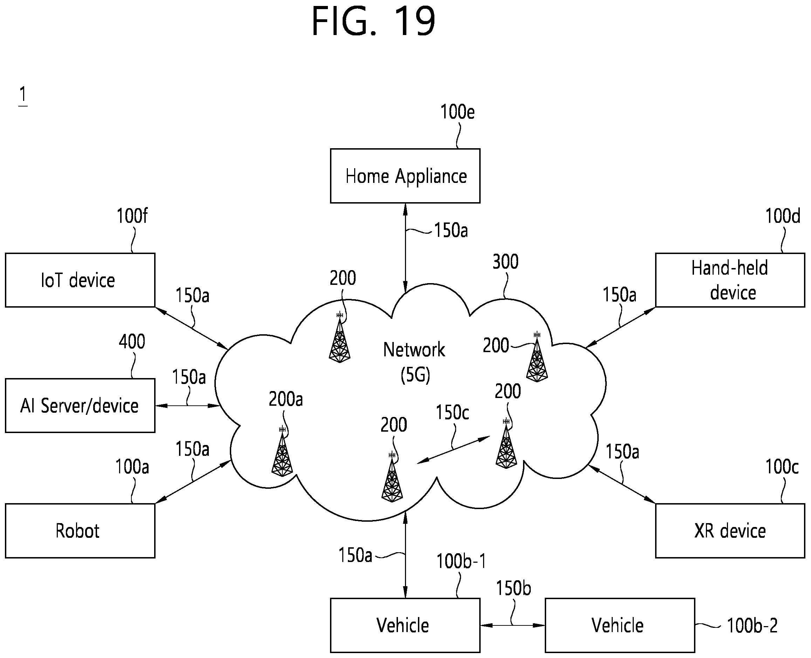

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

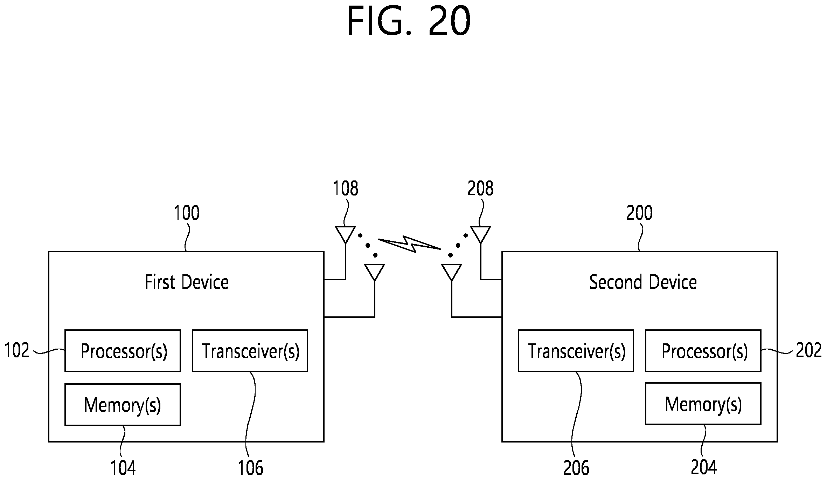

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

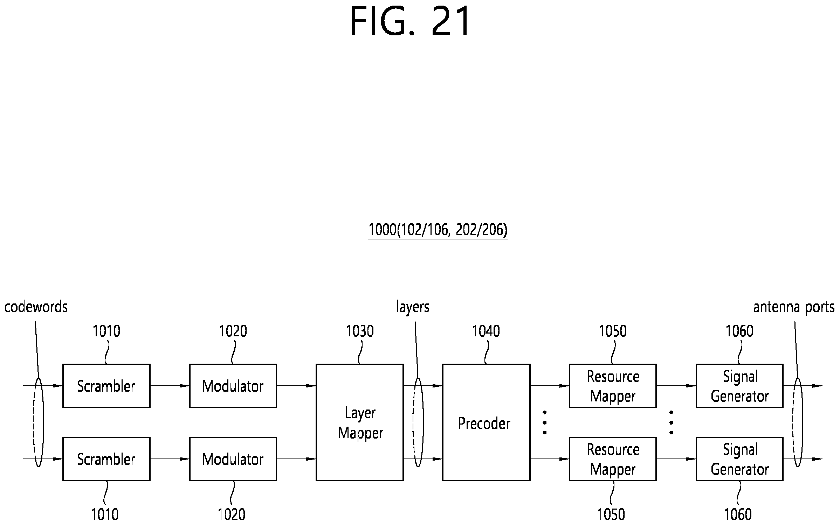

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

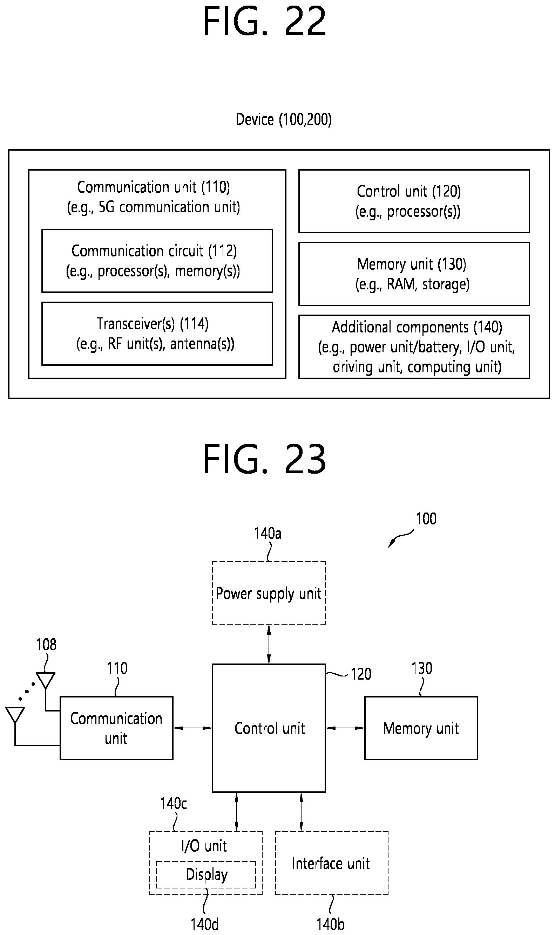

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g.,

other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

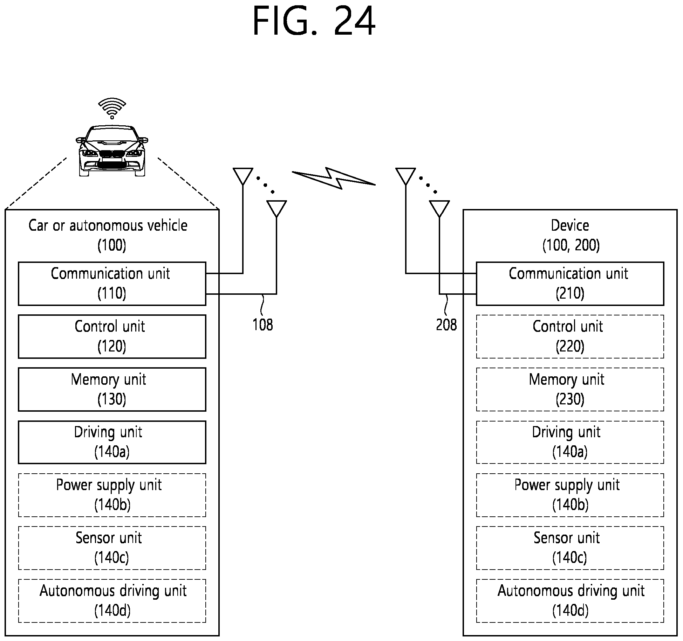

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:

   receiving, from a second device, a first sidelink, SL, positioning reference signal, PRS, based on a first resource;
   receiving, from the second device, information for at least one resource; and
   transmitting, to the second device, a second SL PRS, based on the at least one resource.

2. The method of claim 1, wherein the first resource and the at least one resource are selected by the second device based on sensing.

3. The method of claim 1, wherein the first resource and the at least one resource are resources allocated by a base station.

4. The method of claim 1, wherein the information for the at least one resource includes a resource pool index related to the at least one resource or an offset value of the at least one resource from the first resource.

5. The method of claim 1, wherein the information for the at least one resource is received through a control channel related to the first SL PRS.

6. The method of claim 5, wherein the information for the at least one resource includes information for an SL PRS resource configuration or a location of the at least one resource.

7. The method of claim 1, wherein the information for the at least one resource includes information for a resource related to the at least one resource, based on a resource pool related to the first resource and a resource pool related to the at least one resource being different.

8. The method of claim 7, wherein an offset value of the at least one resource from the first resource is determined based on numerology of the resource pool related to the at least one resource, based on the resource pool related to the first resource and the resource pool related to the at least one resource being different.

9. The method of claim 8, wherein the offset value is determined based on a priority or a latency requirement related to an SL PRS.

10. The method of claim 1, wherein a time distance between the at least one resource and the first resource is greater than equal to a minimum gap.

11. The method of claim 1, further comprising:

  selecting at least one second resource based on sensing, based on all transmission for the second SL PRS being failed based on the at least one resource,
  wherein the second SL PRS is transmitted based on the at least one second resource.

12. The method of claim 1, wherein the first resource is a resource to which a second resource is reselected by the second device,

  wherein the at least one resource is a resource to which a third resource is reselected by the second device, based on an interval between the first resource and the third resource being smaller than a threshold value, and
  wherein the second resource and the third resource are reserved by the second device.

13. The method of claim 1, wherein the first resource is a resource to which a second resource is reselected by the second device, and
  wherein the second resource is reselected to the first resource such that an interval between the second resource and the at least one resource is greater than equal to a threshold value.

14. A first device for performing wireless communication, the first device comprising:

  at least one transceiver;
  at least one processor; and
  at least one memory operably connected to the at least one processor and storing instructions that, based on being executed by the at least one processor, cause the first device to perform operations,
  wherein the operations comprise:

    receiving, from a second device, a first sidelink, SL, positioning reference signal, PRS, based on a first resource;
    receiving, from the second device, information for at least one resource; and
    transmitting, to the second device, a second SL PRS, based on the at least one resource.

15. A device adapted to control a first user equipment, UE, the device comprising:

  at least one processor; and
  at least one memory operably connected to the at least one processor and storing instructions that, based on being executed by the at least one processor, cause the first UE to:

    receive, from a second UE, a first sidelink, SL, positioning reference signal, PRS, based on a first resource;
    receive, from the second UE, information for at least one resource; and
    transmit, to the second UE, a second SL PRS, based on the at least one resource.

16. A non-transitory computer-readable storage medium storing instructions that, based on being executed, cause a first device to:

  receive, from a second device, a first sidelink, SL, positioning reference signal, PRS, based on a first resource;
  receive, from the second device, information for at least one resource; and
  transmit, to the second device, a second SL PRS, based on the at least one resource.

17. A method for performing, by a second device, wireless communication, the method comprising:

performing sensing;

performing a resource reservation for a first resource and at least one resource, based on a result of the sensing;

transmitting, to a first device, a first sidelink, SL, positioning reference signal, PRS, based on the first resource;

transmitting, to the first device, information for the at least one resource;

receiving, from the first device, a second SL PRS, based on the at least one resource; and

performing positioning for the second device based on the first SL PRS and the second SL PRS.

18. The method of claim 17, wherein the information for the at least one resource includes a resource pool index related to the at least one resource or an offset value from the first resource of the at least one resource.

19. A second device for performing wireless communication, the first device comprising:

at least one transceiver;

at least one processor; and

at least one memory operably connected to the at least one processor and storing instructions that, based on being executed by the at least one processor, cause the second device to perform operations,

wherein the operations comprise:

performing sensing;

performing a resource reservation for a first resource and at least one resource, based on a result of the sensing;

transmitting, to a first device, a first sidelink, SL, positioning reference signal, PRS, based on the first resource;

transmitting, to the first device, information for the at least one resource;

receiving, from the first device, a second SL PRS, based on the at least one resource; and

performing positioning for the second device based on the first SL PRS and the second SL PRS.

20. The method of claim 19, wherein the information for the at least one resource includes a resource pool index related to the at least one resource or an offset value from the first resource of the at least one resource.

FIG. 1

FIG. 2

# FIG. 3

FIG. 4

# FIG. 5

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 6

Resource grid

A carrier
(up to 3300 subcarriers,
i.e., 275 RBs)

A BWP

1RB=12 subcarriers

1 RE

1 subcarrier

1 symbol

l=0 ...

k=0

EP 4 513 996 A1

# FIG. 7

PRB N3

PRB 1

PRB 0

$N_{BWP, 2}^{size}$

PRB N2

PRB 1

PRB 0

$N_{BWP, 1}^{size}$

Carrier
Bandwidth

PRB N1

PRB 1

PRB 0

$N_{BWP, 0}^{size}$

$N_{BWP, 2}^{start}$

$N_{BWP, 1}^{start}$

CRB 0

$N_{BWP, 0}^{start}$

Freq.

Time

PRB 0 (Point A) in reference resource block

# FIG. 8

(a)

(b)

# FIG. 9

(a)

(b)

(c)

●: TX UE

⊘: RX UE

# FIG. 10

# FIG. 11

EP 4 513 996 A1

# FIG. 12

EP 4 513 996 A1

# FIG. 13

| NG RAN | | NG-C | AMF | | | NLs | LMF |
|--------|--|------|-----|--|--|-----|-----|
| NRPPa | | | | | | | NRPPa |
| NGAP | | | NGAP | HTTP/2 | | | HTTP/2 |
| SCTP | | | SCTP | TLS | | | TLS |
| | | | | TCP | | | TCP |
| IP | | | IP | IP | | | IP |
| L2 | | | L2 | L2 | | | L2 |
| L1 | | | L1 | L1 | | | L1 |

# FIG. 14

# FIG. 15

EP 4 513 996 A1

# FIG. 16

EP 4 513 996 A1

# FIG. 17

receiving, from a second device,
a first SL PRS, based on a first resource — S1710

receiving, from a second device,
information for at least one resource — S1720

transmitting, to a second device,
a second SL PRS, based on at least one resource — S1730

# FIG. 18

performing sensing — S1810

performing a resource reservation for a first resource
and at least one resource, based on a result of sensing — S1820

transmitting, to a first device,
a first SL PRS, based on a first resource — S1830

transmitting, to a first device,
information for at least one resource — S1840

receiving, from a first device, a second SL PRS,
based on at least one resource — S1850

performing positioning for a second device
based on a first SL PRS and a second SL PRS — S1860

# FIG. 19

# FIG. 20

EP 4 513 996 A1

# FIG. 21

1000(102/106, 202/206)

# FIG. 22

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 23

100

140a

Power supply unit

108

110

Communication
unit

120

Control unit

130

Memory unit

140c

I/O unit

Display

140d

Interface unit

140b

# FIG. 24

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

EP 4 513 996 A1

## INTERNATIONAL SEARCH REPORT

| International application No. |
|---|
| **PCT/KR2023/005466** |

**A.    CLASSIFICATION OF SUBJECT MATTER**

**H04W 64/00**(2009.01)i; **H04W 72/25**(2023.01)i; **H04L 5/00**(2006.01)i; **H04W 72/56**(2023.01)i; **H04B 17/20**(2015.01)i; **H04W 24/08**(2009.01)i; **H04W 92/18**(2009.01)i

According to International Patent Classification (IPC) or to both national classification and IPC

**B.    FIELDS SEARCHED**

Minimum documentation searched (classification system followed by classification symbols)

H04W 64/00(2009.01); H04L 5/00(2006.01); H04W 24/10(2009.01); H04W 56/00(2009.01); H04W 72/04(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1-제2 SL PRS들(first and second sidelink positioning reference signals), 측위(positioning), 제1-제2 자원들(first and second resources), 적어도 하나의 자원(at least one resource), 센싱(sensing), 예약(reservation)

**C.    DOCUMENTS CONSIDERED TO BE RELEVANT**

| Category* | Citation of document, with indication, where appropriate, of the relevant passages | Relevant to claim No. |
|---|---|---|
| X | US 2021-0297206 A1 (QUALCOMM INC.) 23 September 2021 (2021-09-23) See paragraphs [0073]-[0118]; claim 1; and figures 6-10. | 1,3,5,6,14-16 |
| Y | | 2,4,7,10,11,17-20 |
| A | | 8,9,12,13 |
| Y | WO 2021-112610 A1 (LG ELECTRONICS INC.) 10 June 2021 (2021-06-10) See paragraphs [0025]-[0288]. | 2,4,7,10,11,17-20 |
| A | KR 10-2020-0026928 A (SAMSUNG ELECTRONICS CO., LTD.) 11 March 2020 (2020-03-11) See paragraphs [0009]-[0191]; and figures 1-5. | 1-20 |
| A | WO 2021-045565 A1 (LG ELECTRONICS INC.) 11 March 2021 (2021-03-11) See paragraphs [0161]-[0295]; and figures 12-19. | 1-20 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 July 2023** | **21 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/005466**

### C. DOCUMENTS CONSIDERED TO BE RELEVANT

| Category* | Citation of document, with indication, where appropriate, of the relevant passages | Relevant to claim No. |
|---|---|---|
| A | US 2021-0337377 A1 (QUALCOMM INC.) 28 October 2021 (2021-10-28)<br>See paragraphs [0138]-[0143]. | 1-20 |

Form PCT/ISA/210 (second sheet) (July 2022)

**INTERNATIONAL SEARCH REPORT**
**Information on patent family members**

International application No.

**PCT/KR2023/005466**

| Patent document cited in search report | | | Publication date (day/month/year) | Patent family member(s) | | | Publication date (day/month/year) |
|---|---|---|---|---|---|---|---|
| US | 2021-0297206 | A1 | 23 September 2021 | CN | 115280860 | A | 01 November 2022 |
| | | | | EP | 4122255 | A1 | 25 January 2023 |
| | | | | JP | 2023-518708 | A | 08 May 2023 |
| | | | | KR | 10-2022-0155429 | A | 22 November 2022 |
| | | | | TW | 202137785 | A | 01 October 2021 |
| | | | | US | 11601235 | B2 | 07 March 2023 |
| | | | | WO | 2021-188208 | A1 | 23 September 2021 |
| WO | 2021-112610 | A1 | 10 June 2021 | EP | 4072195 | A1 | 12 October 2022 |
| | | | | KR | 10-2021-0071428 | A | 16 June 2021 |
| | | | | KR | 10-2022-0091509 | A | 30 June 2022 |
| | | | | US | 2022-0416976 | A1 | 29 December 2022 |
| KR | 10-2020-0026928 | A | 11 March 2020 | CN | 109327901 | A | 12 February 2019 |
| | | | | CN | 109842934 | A | 04 June 2019 |
| | | | | CN | 109842934 | B | 07 April 2023 |
| | | | | EP | 3636018 | A1 | 15 April 2020 |
| | | | | KR | 10-2367084 | B1 | 24 February 2022 |
| | | | | US | 11330549 | B2 | 10 May 2022 |
| | | | | US | 2021-0160810 | A1 | 27 May 2021 |
| | | | | WO | 2019-027245 | A1 | 07 February 2019 |
| WO | 2021-045565 | A1 | 11 March 2021 | US | 2022-0349978 | A1 | 03 November 2022 |
| US | 2021-0337377 | A1 | 28 October 2021 | CN | 115428390 | A | 02 December 2022 |
| | | | | EP | 4143598 | A1 | 08 March 2023 |
| | | | | TW | 202145813 | A | 01 December 2021 |
| | | | | WO | 2021-221952 | A1 | 04 November 2021 |

Form PCT/ISA/210 (patent family annex) (July 2022)